# EUROPEAN PATENT APPLICATION

(11) **EP 4 342 922 A1**
(43) Date of publication of application: **27.03.2024**
(21) Application number: 22804588.6
(22) Date of filing: 12.05.2022
(51) Int. Cl.: C08F 290/06, C08G 65/336

(54) **FLUOROACRYLIC COMPOSITION, FLUOROCHEMICAL ACTINIC-RAY-CURABLE COMPOSITION, AND ARTICLE**

(30) Priority: 18.05.2021 JP 2021083600
(71) Applicant: SHIN-ETSU CHEMICAL CO., LTD., Tokyo 1000005 (JP)
(72) Inventor: MORI Seiya, Annaka-shi, Gunma 379-0224 (JP); SAKANO Yasunori, Annaka-shi, Gunma 379-0224 (JP)
(74) Representative: Ter Meer Steinmeister & Partner
(86) International application number: PCT/JP2022/020080
(87) International publication number: WO 2022/244675

(57) **Abstract**

A fluoroacrylic composition comprising
1-400 parts of (A) a fluoroacrylic compound that is a linear polymer having a fluoropolyether as a main chain and that has a trifluoromethyl group at one end and a (meth)acrylic group at the other end and has a carboxylic acid ester bond, a sulfonic acid ester bond, an amide bond, a urethane bond, or a urea bond and
100 parts of (B) a fluoroacrylic compound that is a linear polymer having a fluoropolyether as a main chain and has 4-10 (meth)acrylic groups on average in the molecule, two or more of which are present at each of both polymer ends.

By adding the fluoroacrylic composition to an actinic-ray-curable composition, excellent antifouling properties and wear resistance can be imparted to the surface of the cured layer. The fluoroacrylic composition has stable solubility in the actinic-ray-curable composition.

## Description

### TECHNICAL FIELD

The present invention relates to a fluorine-containing acrylic composition having stable solubility at the time of application and capable of imparting excellent anti-fouling property, slippage, and abrasion resistance to a cured product layer surface after the application by being added to an active energy ray-curable composition such as an ultraviolet ray or an electron beam, a fluorine-containing active energy ray-curable composition containing the fluorine-containing acrylic composition, and an article having a cured product layer of the composition on a substrate surface.

Note that in the present invention, a composition simply referred to as "active energy ray-curable composition" does not contain a fluorine-containing acrylic compound as a principal component.

### BACKGROUND ART

Conventionally, a hard coat treatment has been widely and generally used as a means for protecting a surface of a resin molded body or the like. This is to form a hard cured resin layer (hard coat layer) on the surface of the molded body to make it less likely to be damaged. As a material constituting the hard coat layer, a curable resin composition by active energy rays (hard coating agent) is often used such as a thermosetting resin composition, or an ultraviolet or electron beam curable resin composition.

Meanwhile, with expansion of fields of application of resin molded articles and a trend of increasing added value, there are increasing demands for higher functionality of cured resin layer (hard coat layer), and as one of them, there is a demand for imparting anti-fouling property to a hard coat layer. By imparting properties such as water repellency and oil repellency to a surface of the hard coat layer, the hard coat layer is hardly stained or can be easily removed even if stained.

As a method for imparting anti-fouling property to the hard coat layer, a method of applying and/or fixing a fluorine-containing anti-fouling agent to the surface of the hard coat layer once formed has been widely used, and a method of simultaneously forming the hard coat layer and imparting anti-fouling property by adding a fluorine-containing curable component to a curable resin composition (non-fluorinated hard coating agent) before curing and applying and curing the fluorine-containing curable component has also been studied. For example, JP-A H06-211945 (Patent Document 1) shows production of a hard coat layer imparted with anti-fouling property by adding alkylfluoroacrylate to an acryl-based curable resin composition and curing the acryl-based curable resin composition.

The present inventors have promoted various developments as a fluorine-containing compound capable of imparting anti-fouling property to such a curable resin composition, and for example, JP-A 2013-237824 (Patent Document 2) proposes a method for imparting anti-fouling property by blending a fluorine-containing alcohol compound into a thermosetting composition. In addition, the present inventors have proposed photocurable fluorine-containing acrylic compounds shown in, for example, JP-A 2010-53114 (Patent Document 3), JP-A 2010-138112 (Patent Document 4), and JP-A 2010-285501 (Patent Document 5).

In recent years, use of an active energy ray-curable composition (curable resin composition) containing such a fluorine-containing acrylic compound and having excellent anti-fouling property has been greatly expanded, and there has been a demand for higher anti-fouling performance and abrasion resistance performance in an anti-fouling treatment of a hard coat, particularly the surface of a large display, and in a surface treatment of a display or a housing of a portable information device such as a smartphone or a tablet.

However, conventional fluorine-containing acrylic compounds significantly deteriorate in performance due to abrasion by a human finger, and thus do not have practically satisfactory abrasion resistance. One of means for improving abrasion resistance typified by slippage is to arrange a further highly fluorine-modified component on the surface. However, if the fluorine content of a fluorine-containing acrylic compound is increased in the prior art range, the solubility in a non-fluorinated hard coating agent is reduced to cause, on the application surface, partial application failure due to a non-uniform portion such as a defect, or application failure of an orange peel-like entire surface. Therefore, achieving both improvement in abrasion resistance and stable solubility in a non-fluorinated hard coating agent has been considered to be difficult.

### PRIOR ART DOCUMENTS

### PATENT DOCUMENTS

Patent Document 1: JP-A H06-211945
Patent Document 2: JP-A 2013-237824
Patent Document 3: JP-A 2010-53114
Patent Document 4: JP-A 2010-138112
Patent Document 5: JP-A 2010-285501

### SUMMARY OF INVENTION

### TECHNICAL PROBLEM

The present invention has been made in view of the above circumstances, and an object of the present invention is to provide a fluorine-containing acrylic composition that is capable of imparting excellent anti-fouling property and abrasion resistance to a cured product layer surface and has stable solubility in an active energy ray-curable composition by being added to an active energy ray-curable composition such as an ultraviolet ray or an electron beam, a fluorine-containing active energy ray-curable composition containing the fluorine-containing acrylic composition, and an article having a cured product layer of the composition on a substrate surface.

### SOLUTION TO PROBLEM

As a result of studies to achieve the above object, the present inventors have found that a fluorine-containing acrylic composition containing, as essential components, (A) a fluorine-containing acrylic compound as a component (A) that is a linear polymer having a main chain of fluoropolyether, the component (A) having a molecular chain including a trifluoromethyl group at one terminal and a (meth)acrylic group at another terminal, the component (A) having two or more bonds of an identical kind or different kinds selected from the group consisting of a carboxylic acid ester bond, a sulfonic acid ester bond, an amide bond, a urethane bond, and a urea bond per molecule and (B) a fluorine-containing acrylic compound as a component (B) that is a linear polymer having a main chain of fluoropolyether, the component (B) having a molecular chain including two or more (meth)acrylic groups at each terminal, the component (B) having 4 to 10 (meth)acrylic groups on average per molecule, the fluorine-containing acrylic composition containing 1 to 400 parts by weight of the component (A) per 100 parts by weight of the component (B), satisfies the above requirements, and is useful as an anti-fouling additive or the like such as a hard coating agent, and thus the present invention has been completed.

Therefore, the present invention provides the following fluorine-containing acrylic composition, fluorine-containing active energy ray-curable composition, and article.
[1] A fluorine-containing acrylic composition containing:
   as essential components,
      (A) a fluorine-containing acrylic compound as a component (A) that is a linear polymer having a main chain of fluoropolyether, the component (A) having a molecular chain including a trifluoromethyl group at one terminal and a (meth)acrylic group at another terminal, the component (A) having two or more bonds of an identical kind or different kinds selected from the group consisting of a carboxylic acid ester bond, a sulfonic acid ester bond, an amide bond, a urethane bond, and a urea bond per molecule; and
      (B) a fluorine-containing acrylic compound as a component (B) that is a linear polymer having a main chain of fluoropolyether, the component (B) having a molecular chain including two or more (meth)acrylic groups at each terminal, the component (B) having 4 to 10 (meth)acrylic groups on average per molecule,
   the fluorine-containing acrylic composition containing 1 to 400 parts by weight of the component (A) per 100 parts by weight of the component (B).
[2] The fluorine-containing acrylic composition according to [1], wherein the component (A) is a fluorine-containing acrylic compound having the general formula (1):

   F-Rf^{A}-C(=O)-NR^{a} ₐ[Y-[X¹_{b}]₂₋ₐ (1)

   wherein Rf^{A} is a divalent perfluoropolyether group, R^{a} is a hydrogen atom or a monovalent hydrocarbon group having 1 to 8 carbon atoms, Y is independently a (b+1)-valent linking group having 1 to 20 carbon atoms, X¹ is independently a monovalent organic group containing an acrylic group or an α-substituted acrylic group and one or more bonds selected from the group consisting of a carboxylic acid ester bond, a sulfonic acid ester bond, an amide bond, a urethane bond, and a urea bond and containing at least one of the acrylic group or the α-substituted acrylic group on average per molecule, a is 0 or 1, and b is an integer of 1 to 10.
[3] The fluorine-containing acrylic composition according to [2], wherein
   in the component (A), Rf^{A} in the general formula (1) is a divalent perfluoropolyether group having the structural formula: 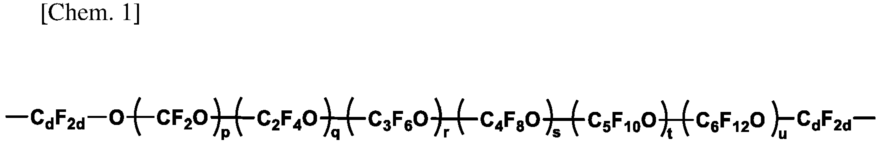 wherein d is independently for each unit an integer of 1 to 3, p, q, r, s, t, and u are each an integer of 0 to 200, p + q + r + s + t + u is an integer of 3 to 200, each of these units may be linear or branched, and each of the repeating units shown in parentheses appended with p, q, r, s, t, and u may be randomly arranged.
[4] The fluorine-containing acrylic composition according to [2] or [3], wherein
   in the component (A), Rf^{A} in the general formula (1) is any of divalent perfluoropolyether groups having the structural formula:

   -CF₂O-(CF₂O)ₚ₁(CF₂CF₂O)_{q1}-CF₂-

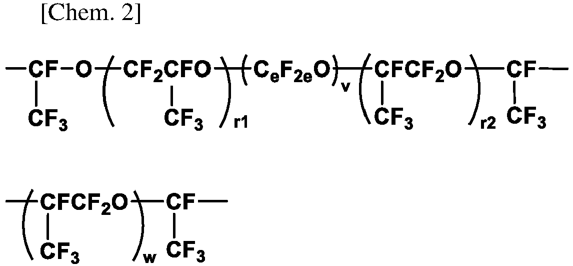

   wherein each of the repeating units enclosed in parentheses appended with p1, q1, r1, r2, and v are randomly arranged, p1 is an integer of 1 to 199, q1 is an integer of 1 to 170, p1 + q1 is 6 to 200, e is independently for each unit an integer of 1 to 6, v is an integer of 0 to 6, r1 and r2 are each an integer of 1 to 100, r1 + r2 is an integer of 2 to 120, v + r1 + r2 is an integer of 3 to 126, CₑF₂ₑO may be linear or branched, and is linear when e is 3, and w is an integer of 4 to 120.
[5] The fluorine-containing acrylic composition according to any of [2] to [4], wherein
   in the component (A), X¹ in the general formula (1) has a structure having the following formula: 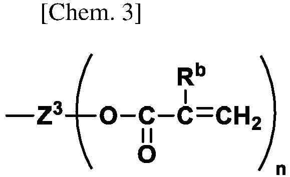 wherein R^{b} is independently a hydrogen atom, a fluorine atom, a methyl group, or a trifluoromethyl group, Z³ is a divalent or trivalent hydrocarbon group having 1 to 18 carbon atoms and containing one or more bonds selected from the group consisting of a carboxylic acid ester bond, a sulfonic acid ester bond, an amide bond, a urethane bond, and a urea bond, and n is 1 or 2.
[6] The fluorine-containing acrylic composition according to any of [2] to [5], wherein in the component (A), X¹ in the general formula (1) has any one of the following formulas. 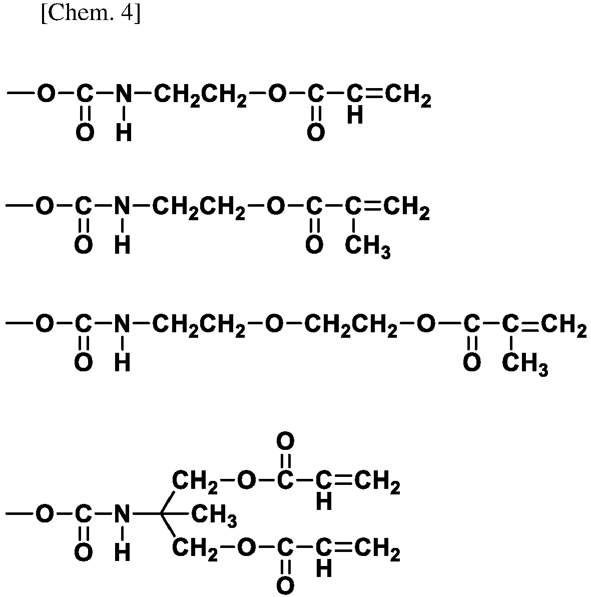
[7] The fluorine-containing acrylic composition according to any of [2] to [6], wherein in the component (A), the fluorine-containing acrylic compound having the general formula (1) is selected from compounds of the following formulas: 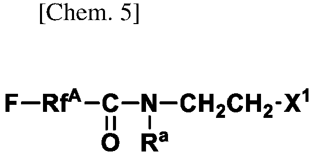 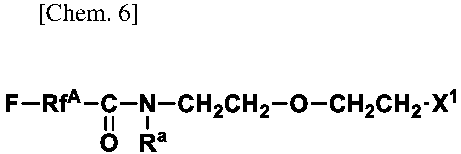 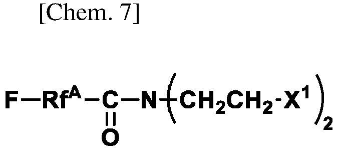 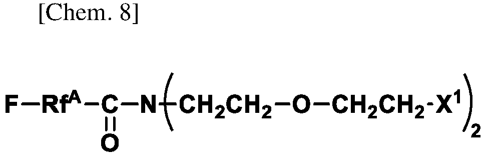 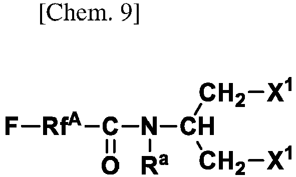 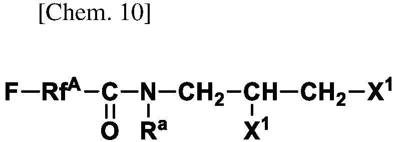 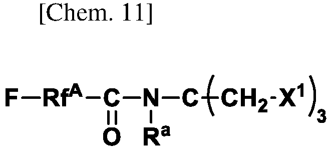 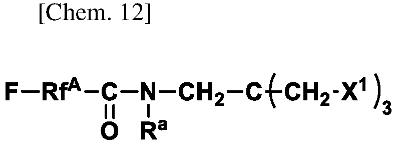 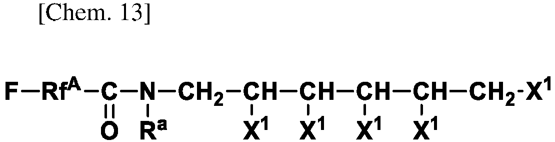 wherein Rf^{A}, R^{a}, and X¹ are as defined above.
[8] The fluorine-containing acrylic composition according to any of [1] to [7], wherein the component (B) is a fluorine-containing acrylic compound having the general formula (2): 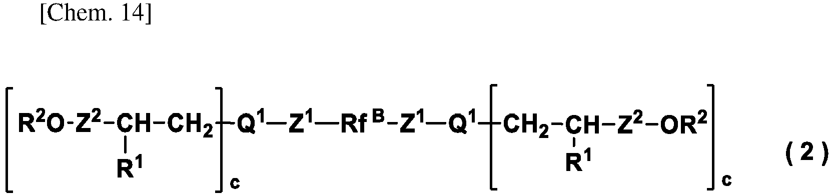 wherein Rf^{B} is a divalent perfluoropolyether group, Z¹ is independently a linking group composed of a divalent hydrocarbon group having 1 to 20 carbon atoms which may contain at least one heteroatom selected from an oxygen atom, a nitrogen atom, and a silicon atom, and which may contain a cyclic structure therein, with the proviso that a part of hydrogen atoms bonded to a carbon atom may be substituted with a fluorine atom, Q¹ is independently a (c+1)-valent linking group containing at least (c+1) number of silicon atoms, which may take a cyclic structure, c is independently an integer of 2 to 5, Z² is independently a divalent hydrocarbon group having 1 to 100 carbon atoms which may contain an oxygen atom and/or a nitrogen atom, and which may contain a cyclic structure therein, R¹ is independently a hydrogen atom or a monovalent hydrocarbon group having 1 to 8 carbon atoms, R² is independently a hydrogen atom or a monovalent organic group having a (meth)acrylic group which may contain an oxygen atom and/or a nitrogen atom, with the proviso that 2 or more R²s at each terminal per molecule and 4 to 10 R²s on average per molecule are the monovalent organic group.
[9] The fluorine-containing acrylic composition according to [8], wherein
   in the component (B), Rf^{B} in the general formula (2) is a divalent perfluoropolyether group having the structural formula: 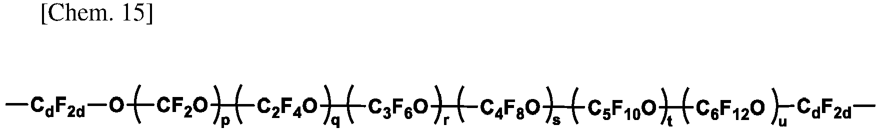 wherein d is independently for each unit an integer of 1 to 3, p, q, r, s, t, and u are each an integer of 0 to 200, p + q + r + s + t + u is an integer of 3 to 200, each of these units may be linear or branched, and each of the repeating units shown in parentheses appended with p, q, r, s, t, and u may be randomly arranged.
[10] The fluorine-containing acrylic composition according to [8] or [9], wherein
   in the component (B), Rf^{B} in the general formula (2) is any of divalent perfluoropolyether groups having the structural formula:

   -CF₂O-(CF₂O)ₚ(CF₂CF₂O)_{q}-CF₂-

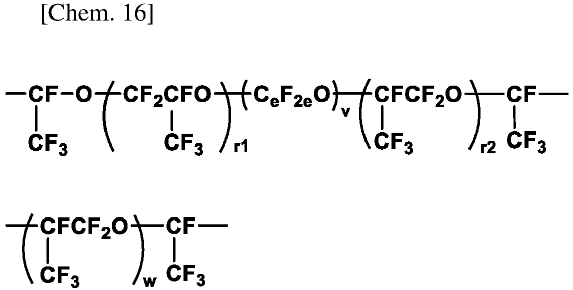

   wherein each of the repeating units enclosed in parentheses appended with p1, q1, r1, r2, and v are randomly arranged, p1 is an integer of 1 to 199, q1 is an integer of 1 to 170, p1 + q1 is 6 to 200, e is independently for each unit an integer of 1 to 6, v is an integer of 0 to 6, r1 and r2 are each an integer of 1 to 100, r1 + r2 is an integer of 2 to 120, v + r1 + r2 is an integer of 3 to 126, CₑF₂ₑO may be linear or branched, and is linear when e is 3, and w is an integer of 4 to 120.
[11] The fluorine-containing acrylic composition according to any of [8] to [10], wherein in the component (B), Z¹ in the general formula (2) has any one of the following formulas:

   -CH₂CH₂-

   -CH₂CH₂CH₂-

   -CH₂CH₂CH₂CH₂-

   -CH₂OCH₂CH₂-

   -CH₂OCH₂CH₂CH₂- 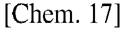 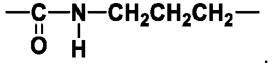
[12] The fluorine-containing acrylic composition according to any of [8] to [11], wherein in the component (B), Q¹ in the general formula (2) has the following formula: 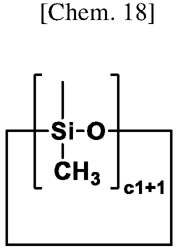 wherein c1 is 2 or 3.
[13] The fluorine-containing acrylic composition according to any of [8] to [12], wherein
   in the component (B), the fluorine-containing acrylic compound having the general formula (2) is a fluorine-containing acrylic compound having the general formula (3) or (4): 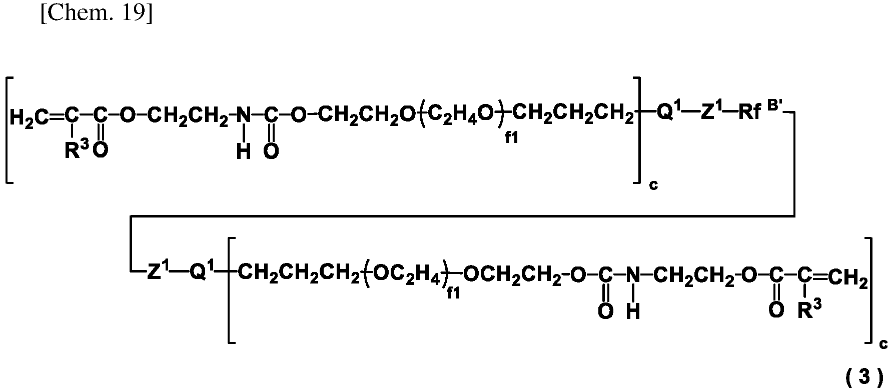 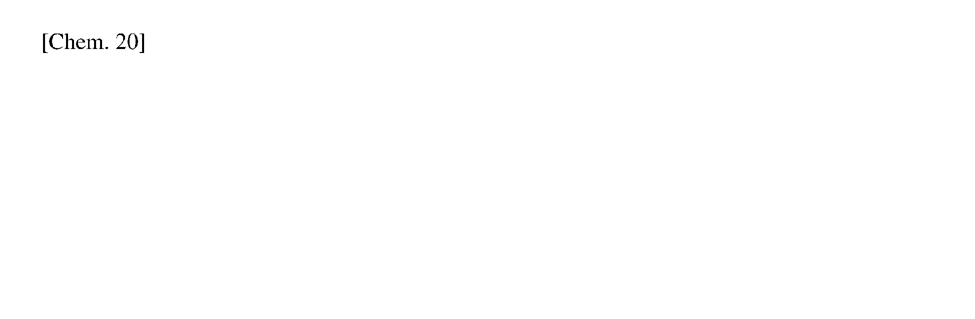 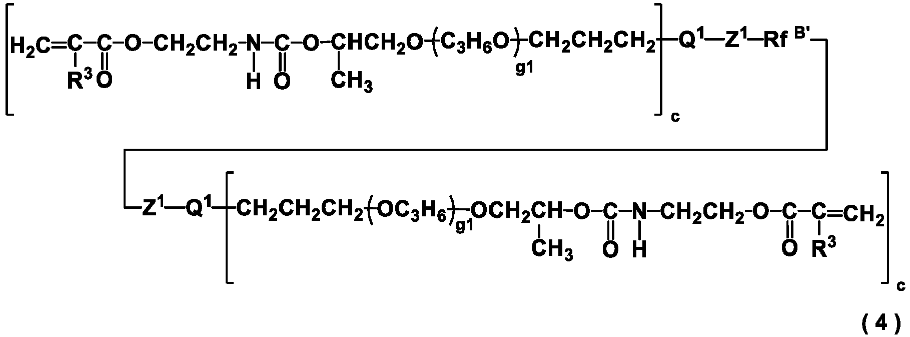 wherein Z¹, Q¹, and c are as defined above, Rf^{B,} is -CF₂O(CF₂O)ₚ₁(CF₂CF₂O)_{q1}CF₂-, p1, q1, and p1 + q1 are as defined above, -(CF₂O)- and -(CF₂CF₂O)- are randomly arranged, R³ is a hydrogen atom or a methyl group, f1 and g1 are an integer of 0 to 10, and each of the repeating units enclosed in parentheses appended with f1 and g1 may be linear or branched.
[14] A fluorine-containing active energy ray-curable composition containing 0.005 to 100 parts by weight of the fluorine-containing acrylic composition according to any of [1] to [13] per 100 parts by weight of an active energy ray-curable composition (E).
[15] The fluorine-containing active energy ray-curable composition according to [14], wherein the active energy ray-curable composition (E) contains a non-fluorinated acrylic compound (a).
[16] The fluorine-containing active energy ray-curable composition according to [14] or [15], wherein the active energy ray-curable composition (E) contains a photopolymerization initiator (b).
[17] The fluorine-containing active energy ray-curable composition according to any of [14] to [16], wherein the active energy ray-curable composition (E) contains a solvent.
[18] An article having a cured product layer of the fluorine-containing active energy ray-curable composition according to any of [14] to [17] on its surface.

### ADVANTAGEOUS EFFECTS OF INVENTION

The fluorine-containing acrylic composition of the present invention has stable solubility in an active energy ray-curable composition, and can provide a cured product layer surface having excellent anti-fouling property and abrasion resistance. Therefore, the fluorine-containing acrylic composition is useful as an anti-fouling additive or the like for imparting liquid repellency, anti-fouling property, and abrasion resistance to an ultraviolet-curable or thermosetting composition or the like such as a hard coating agent, a coating material, or an antireflection coating.

### DESCRIPTION OF EMBODIMENTS

The fluorine-containing acrylic composition of the first embodiment of the present invention is a fluorine-containing acrylic composition containing:
as essential components,
   (A) a fluorine-containing acrylic compound as a component (A) that is a linear polymer having a main chain of fluoropolyether, the component (A) having a molecular chain including a trifluoromethyl group at one terminal and a (meth)acrylic group at another terminal, the component (A) having two or more bonds of an identical kind or different kinds selected from the group consisting of a carboxylic acid ester bond, a sulfonic acid ester bond, an amide bond, a urethane bond, and a urea bond per molecule; and
   (B) a fluorine-containing acrylic compound as a component (B) that is a linear polymer having a main chain of fluoropolyether, the component (B) having a molecular chain including two or more (meth)acrylic groups at each terminal, the component (B) having 4 to 10 (meth)acrylic groups on average per molecule,
the fluorine-containing acrylic composition containing 1 to 400 parts by weight of the component (A) per 100 parts by weight of the component (B).

In the present invention, the term "acrylic compound" is a generic term for compounds having an acrylic group or a methacrylic group, and an "acrylic composition" contains an acrylic compound defined herein. The term "(meth)acrylic group" refers to one or both of an acrylic group and a methacrylic group, the term "(meth)acrylic acid" refers to one or both of acrylic acid and methacrylic acid, and the term "(meth)acrylate" refers to one or both of acrylate and methacrylate. Note that both a (meth)acryloyl group and a (meth)acryloyloxy group are included, as a subordinate concept, in the category of a "(meth)acrylic group" of the present invention.

In the present invention, each of the components (A) and (B) is not to be a single compound, and for example, when the weight in blending is considered, the total of the compounding amounts of one or more blended compounds satisfying the condition of the component (A) or (B) is to be considered as the component amount.

### [Component (A)]

The component (A) as a first essential component in the fluorine-containing acrylic composition of the present invention is a fluorine-containing acrylic compound that is a linear polymer having a main chain of fluoropolyether, and the fluorine-containing acrylic compound has a molecular chain including a trifluoromethyl group (CF₃-) at one terminal and a (meth)acrylic group at another terminal, and has two or more bonds of an identical kind or different kinds selected from the group consisting of a carboxylic acid ester bond, a sulfonic acid ester bond, an amide bond, a urethane bond, and a urea bond (that is, one or more bonds of two of more kinds, or two or more bonds of one kind) per molecule.

A fluorine-containing acrylic compound having a main chain of fluoropolyether having a molecular chain including a trifluoromethyl group at one terminal and a (meth)acrylic group at another terminal generally provides a cured product layer surface having excellent abrasion resistance (slippage), but has low solubility in an active energy ray-curable composition. The present inventors have found that if the compound has two or more bonds of an identical kind or different kinds selected from the group consisting of a carboxylic acid ester bond, a sulfonic acid ester bond, an amide bond, a urethane bond, and a urea bond, the compound exhibits excellent solubility in an active energy ray-curable composition, and can impart excellent anti-fouling property and abrasion resistance to a cured product layer surface by being added to the active energy ray-curable composition.

Such a compound is preferably represented by the fluorine-containing acrylic compound having the general formula (1):

F-Rf^{A}-C(=O)-NR^{a}ₐ[Y-[X¹]_{b}]₂₋ₐ (1)

wherein Rf^{A} is a divalent perfluoropolyether group, R^{a} is a hydrogen atom or a monovalent hydrocarbon group having 1 to 8 carbon atoms, Y is independently a (b+1)-valent linking group (that is, di- to undeca-valent linking group) having 1 to 20 carbon atoms, X¹ is independently a monovalent organic group containing an acrylic group or an α-substituted acrylic group and one or more bonds selected from the group consisting of a carboxylic acid ester bond, a sulfonic acid ester bond, an amide bond, a urethane bond, and a urea bond and containing at least one of the acrylic group or the α-substituted acrylic group on average per molecule, a is 0 or 1, and b is an integer of 1 to 10.

In the formula (1), Rf^{A} is a divalent perfluoropolyether group, and preferably a divalent perfluoropolyether group with a molecular weight of 400 to 20,000 composed of a perfluoroalkylene group having 1 to 6 carbon atoms and an oxygen atom, and Rf^{A} preferably has a perfluorooxyalkylene structure having 1 to 6 carbon atoms, particularly 1 to 3 carbon atoms as follows as a main repeating unit.

-CF₂O-

-CF₂CF₂O-

-CF(CF₃)CF₂O-

-CF₂CF₂CF₂O-

These structures may be any one homopolymer, or a random or block polymer composed of a plurality of structures.

Examples of Rf^{A} having such a structure include the following structure: 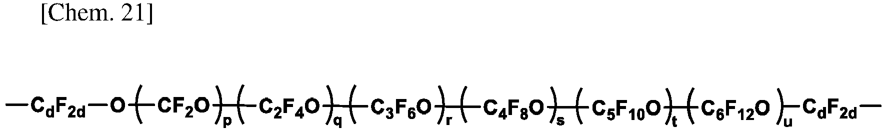 wherein d is independently for each unit an integer of 1 to 3, p, q, r, s, t, and u are each an integer of 0 to 200, p + q + r + s + t + u is an integer of 3 to 200, each of these units may be linear or branched, and each of the repeating units shown in parentheses appended with p, q, r, s, t, and u may be randomly arranged.

In the above formula, d is independently for each unit an integer of 1 to 3. p, q, r, s, t, and u are each an integer of 0 to 200. Preferably, p is an integer of 5 to 100, q is an integer of 5 to 100, r is an integer of 0 to 100, s is an integer of 0 to 100, t is an integer of 0 to 100, u is an integer of 0 to 100, and p + q + r + s + t + u is an integer of 3 to 200, preferably 10 to 105. More preferably, p + q is an integer of 10 to 105 and particularly 15 to 60, and r = s = t = u = 0. If p + q + r + s + t + u is smaller than the above upper limit, adhesion and curability are good, and if p + q + r + s + t + u is larger than the above lower limit, characteristics of the fluoropolyether group can be sufficiently exhibited, which is preferable. In the above formula, each unit may be linear or branched. Each of the repeating units shown in parentheses appended with p, q, r, s, t, and u may be randomly arranged.

Preferred examples of Rf^{A} having such a structure include the following structures:

-CF₂O-(CF₂O)ₚ₁(CF₂CF₂O)_{q1}-CF₂-

wherein the repeating units enclosed in parentheses appended with p1 and q1 are randomly arranged, p1 is an integer of 1 to 199, preferably 1 to 99, q1 is an integer of 1 to 170, preferably 1 to 99, and p1 + q1 is an integer of 6 to 200, preferably 10 to 100, 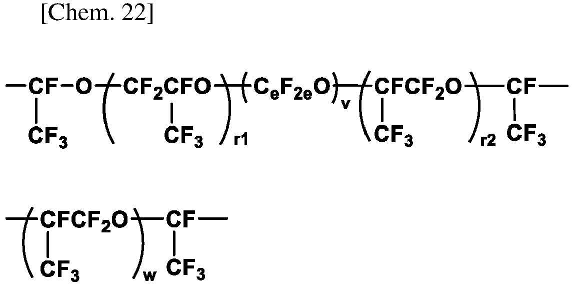 wherein the repeating units enclosed in parentheses appended with r1, r2, and v are randomly arranged, e is independently for each unit an integer of 1 to 6, v is an integer of 0 to 6, r1 is an integer of 1 to 100, r2 is an integer of 1 to 100, r1 + r2 is an integer of 2 to 120, preferably 4 to 100, and v + r1 + r2 is an integer of 3 to 126, preferably 4 to 100, CₑF₂ₑO may be linear or branched, and is linear when e is 3, and w is an integer of 4 to 120, preferably 4 to 80.

Among these, the following structure is particularly preferable as Rf^{A}.

-CF₂O-(CF₂O)ₚ₁(CF₂CF₂O)_{q1}-CF₂-

The molecular weight of Rf^{A} is preferably such that the numerical average molecular weight of a corresponding structural part is each contained in the range of 400 to 20,000, preferably 800 to 10,000, and the molecular weight distribution is not particularly limited. In the present invention, the molecular weight is a numerical average molecular weight calculated from a ratio between a terminal structure and a main chain structure based on ¹H-NMR and ¹⁹F-NMR (the same applies hereinafter).

In the formula (1), R^{a} is a hydrogen atom or a monovalent hydrocarbon group having 1 to 8, preferably 1 to 6 carbon atoms. Specific examples of the monovalent hydrocarbon group include alkyl groups such as a methyl group, an ethyl group, a propyl group, an isopropyl group, a butyl group, an isobutyl group, a tert-butyl group, a pentyl group, a neopentyl group, a hexyl group, and an octyl group, cycloalkyl groups such as a cyclohexyl group, alkenyl groups such as a vinyl group, an allyl group, and a propenyl group, aryl groups such as a phenyl group, a tolyl group, and a xylyl group, and aralkyl groups such as a benzyl group and a phenylethyl group. R^{a} is preferably a hydrogen atom, a methyl group, or an ethyl group.

In the formula (1), a is 0 or 1.

In the formula (1), b is independently an integer of 1 to 10, preferably an integer of 1 to 8, and more preferably an integer of 1 to 5.

In the formula (1), Y is independently a (b+1)-valent linking group (that is, di- to undeca-valent linking group) having 1 to 20 carbon atoms. Examples of a preferred structure as such Y include the following structural groups. In the following structures, the left bond hand is bonded to N, and the other bond hands are bonded to X¹.

-CH₂CH₂-

-CH₂CH₂CH₂-

-CH₂CH₂CH₂CH₂-

-CH₂OCH₂CH₂-

-CH₂CH₂OCH₂CH₂-

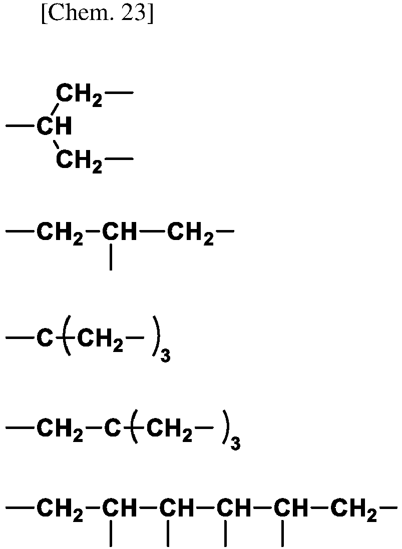

In the formula (1), X¹ is independently a monovalent organic group containing an acrylic group or an α-substituted acrylic group and one or more bonds selected from the group consisting of a carboxylic acid ester bond, a sulfonic acid ester bond, an amide bond, a urethane bond, and a urea bond and containing at least one of the acrylic group or the α-substituted acrylic group on average per molecule.

Preferred examples of such X¹ include a structure having the following formula.

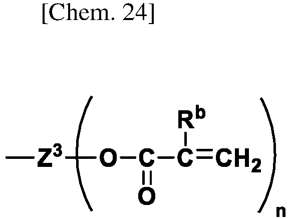

In the above formula, R^{b} is independently a hydrogen atom, a fluorine atom, a methyl group, or a trifluoromethyl group, and preferably a hydrogen atom or a methyl group.
n is 1 or 2.

In the above formula, Z³ is a divalent or trivalent hydrocarbon group having 1 to 18 carbon atoms and containing one or more bonds selected from the group consisting of a carboxylic acid ester bond, a sulfonic acid ester bond, an amide bond, a urethane bond, and a urea bond. Examples of a preferred structure as such Z³ include the following structural groups. In the following structures, the left bond hand is bonded to Y, and the other bond hands are bonded to an oxygen atom.

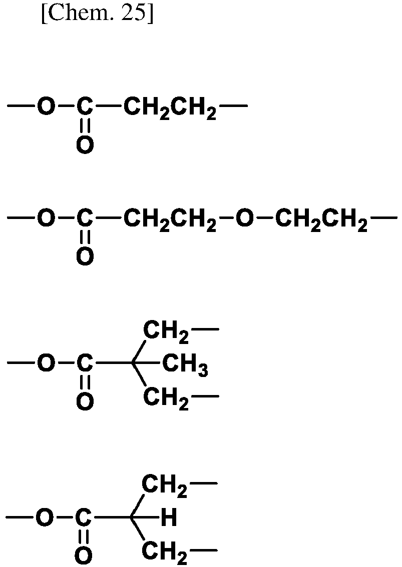

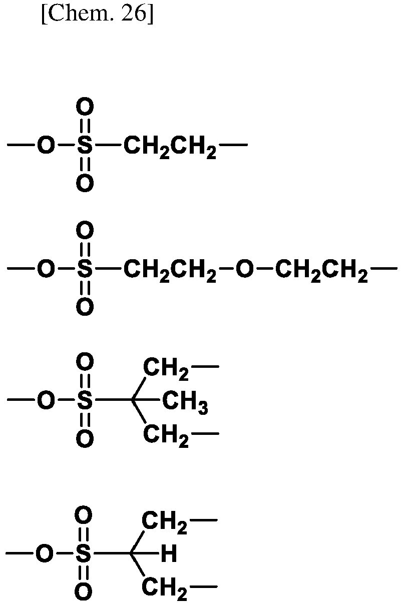

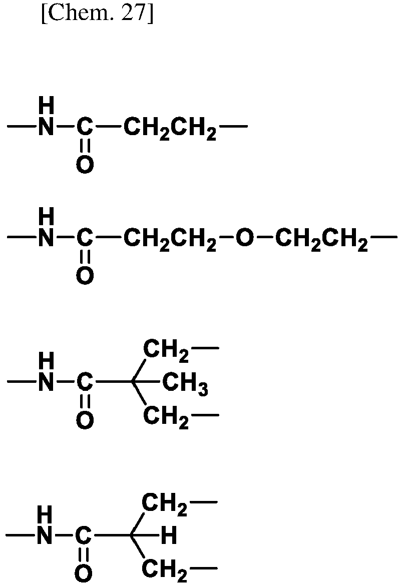

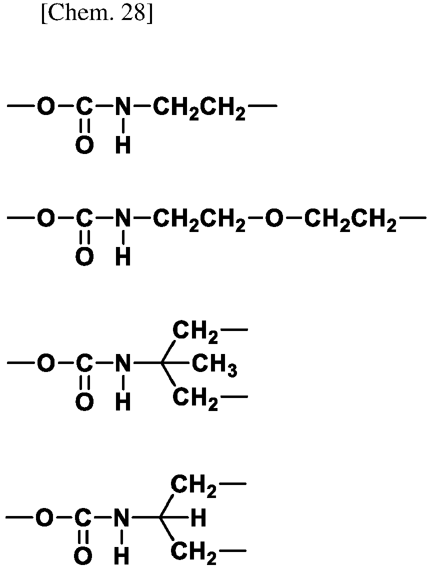

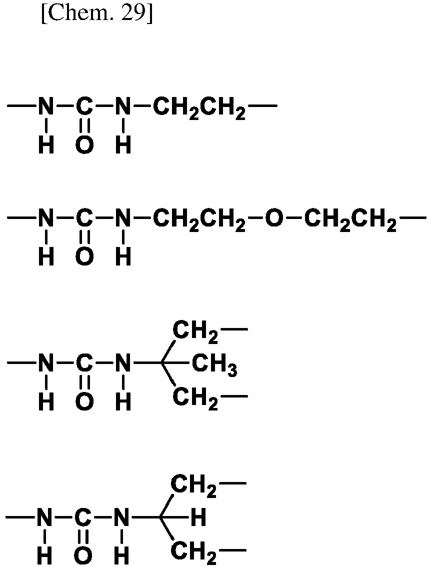

Particularly preferred examples of such X¹ include the following structural groups.

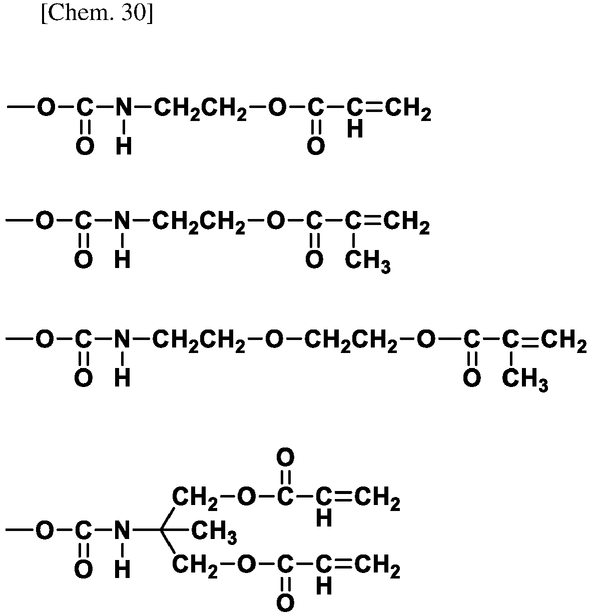

More specific examples of such a component (A) include compounds represented by the following structural groups: 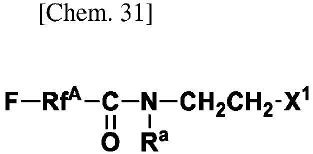 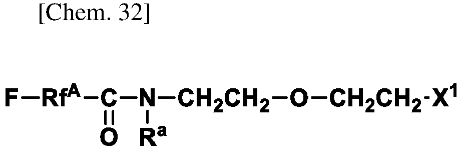 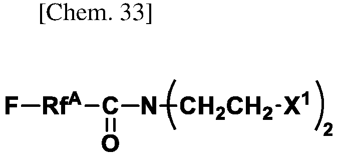 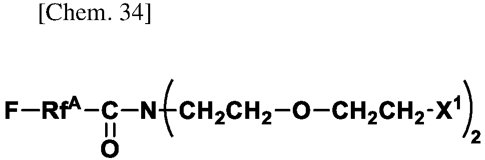 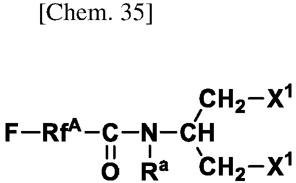 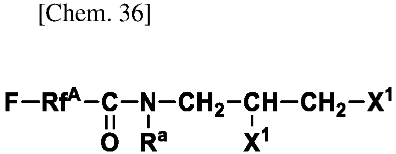 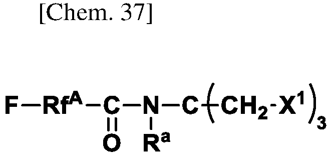 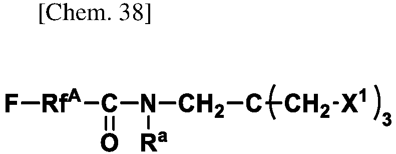 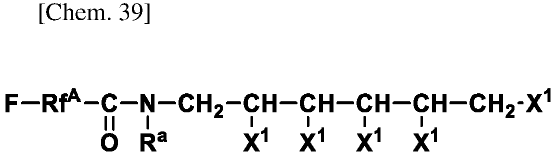 wherein Rf^{A}, R^{a}, and X¹ are as defined above.

The fluorine-containing acrylic compound as the component (A) having the general formula (1):

F-Rf^{A}-C(=O)-NR^{a}ₐ[Y-[X1]_{b}]₂₋ₐ (1)

wherein Rf^{A}, R^{a}, Y, X¹, a, and b are as defined above
is preferably synthesized, for example, with a method of performing an amidation reaction of
a fluorine-containing compound having a carboxylic acid ester group at its terminal and having the general formula (5):

   F-Rf^{A}-C(=O)-O-R^{c} (5)

   wherein Rf^{A} is as defined above, R^{c} is a monovalent hydrocarbon group having 1 to 20 carbon atoms which may contain at least one heteroatom selected from an oxygen atom, a nitrogen atom, and a silicon atom, with the proviso that a part or all of hydrogen atoms bonded to a carbon atom may be substituted with a fluorine atom and
an aminoalcohol compound having the general formula (6):

   H-NR^{a}ₐ[Y-[OH]_{b}]₂₋ₐ (6)

   wherein R^{a}, Y, a, and b are as defined above,
and thus a fluorine-containing alcohol compound as an intermediate can be obtained.

In the formula (5), R^{c} is a monovalent hydrocarbon group having 1 to 20 carbon atoms which may contain at least one heteroatom selected from an oxygen atom, a nitrogen atom, and a silicon atom, with the proviso that a part or all of hydrogen atoms bonded to a carbon atom may be substituted with a fluorine atom. Examples of such R^{c} include -CH₃, -C₂H₅, -C₃H₇, - C₄H₉, -C₅H₁₁, -C₆H₁₃, -CF₃, -C₂F₅, -C₃F₇, -C₄F₉, -C₅F₁₁, -C₆F₁₃, -C₇F₁₅, -C₈F₁₇, -CH(CF₃)₂, - CH₂CF₃, and -C₂H₄CF₃.

Here, examples of the fluorine-containing compound having a carboxylic acid ester group at its terminal and having the formula (5) include those shown below:

F-Rf^{A}-C(=O)-O-CH₃

F-Rf^{A}-C(=O)-O-C₂H₅

F-Rf^{A}-C(=O)-O-C₃H₇

F-Rf^{A}-C(=O)-O-C₄H₉

F-Rf^{A}-C(=O)-O-C₅H₁₁

F-Rf^{A}-C(=O)-O-C₆H₁₃

F-Rf^{A}-C(=O)-O-CF₃

F-Rf^{A}-C(=O)-O-C₂F₅

F-Rf^{A}-C(=O)-O-CH(CF₃)₂

wherein Rf^{A} is as defined above.

Examples of the aminoalcohol compound having the formula (6) include those shown below.

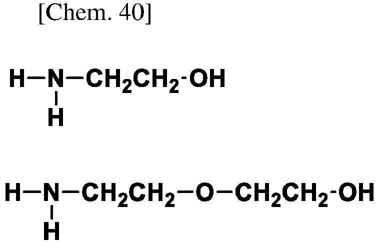

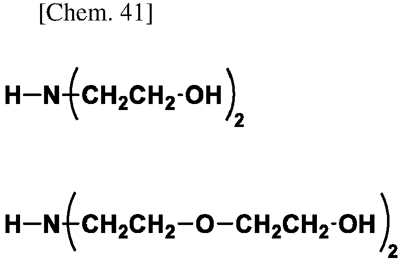

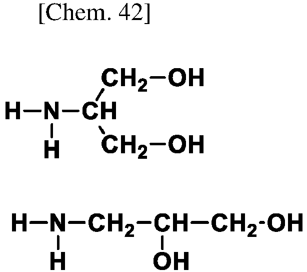

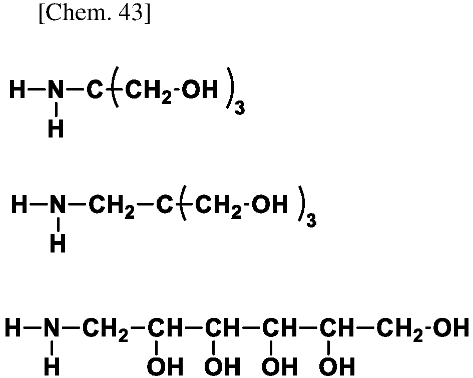

In this amidation reaction, it is desirable to mix the fluorine-containing compound having a carboxylic acid ester group at its terminal and having the formula (5) with the aminoalcohol compound having the formula (6) and perform a reaction at a reaction temperature of 0 to 80°C, preferably 0 to 65°C, for 1 minute to 48 hours, particularly 10 minutes to 12 hours. If the reaction temperature is too low, the reaction may be stopped while the progress of the reaction is insufficient, and if it is too high, an undesired side reaction, decomposition of raw materials, or the like may occur.

In this case, the reaction ratio between the fluorine-containing compound having a carboxylic acid ester group at its terminal and having the formula (5) and the aminoalcohol compound having the formula (6) is desirably such that the number of moles of the aminoalcohol compound having the formula (6) used for the reaction is 1 to 12 times, particularly 1.2 to 6 times the total number of moles of the fluorine-containing compound having a carboxylic acid ester group at its terminal and having the formula (5). If the amount of the aminoalcohol compound having the formula (6) is excessively smaller than the above-described amount, a fluorine-containing alcohol compound having high solubility may be difficult to obtain.

The above amidation reaction can be performed without a solvent, but a solvent may be used for dilution as necessary. At this time, as a diluent solvent, a widely and generally used organic solvent can be used, and a diluent solvent is preferable that has a boiling point equal to or higher than a target reaction temperature and does not inhibit the reaction. Preferred examples of such a solvent include partially fluorine-modified solvents including fluorine-modified aromatic hydrocarbon-based solvents such as m-xylene hexafluoride and benzotrifluoride, and fluorine-modified ether-based solvents such as methyl perfluorobutyl ether, and m-xylene hexafluoride is particularly preferable.

When a solvent is used, the amount of the solvent used is preferably 5 to 2,000 parts by weight, and more preferably 50 to 500 parts by weight per 100 parts by weight of the fluorine-containing compound having a carboxylic acid ester group at its terminal and having the formula (5). If less than the above-described amount of a solvent is used, a dilution effect by the solvent becomes low, and if more than the above-described amount of a solvent is used, the degree of dilution becomes too high, and the reaction rate may be reduced.

After completion of the reaction, the unreacted aminoalcohol compound having the formula (6) and the diluent solvent are preferably removed with a known method such as distillation under reduced pressure, extraction, or adsorption.

As described above, the fluorine-containing compound having a carboxylic acid ester group at its terminal and having the general formula (5) and the aminoalcohol compound having the general formula (6) are subjected to an amidation reaction to obtain a fluorine-containing alcohol compound having the following general formula (7):

F-Rf^{A}-C(=O)-NR^{a}ₐ[Y-[OH]_{b}]₂₋ₐ (7)

wherein Rf^{A}, R^{a}, Y, a, and b are as defined above.

Examples of such a fluorine-containing alcohol compound having the formula (7) include those shown below: 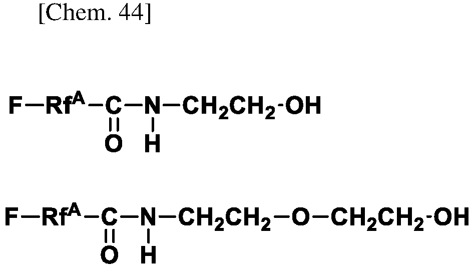 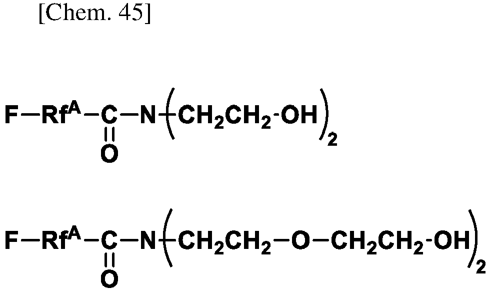 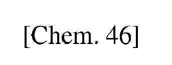 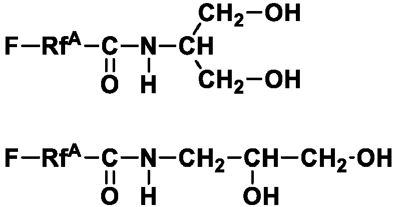 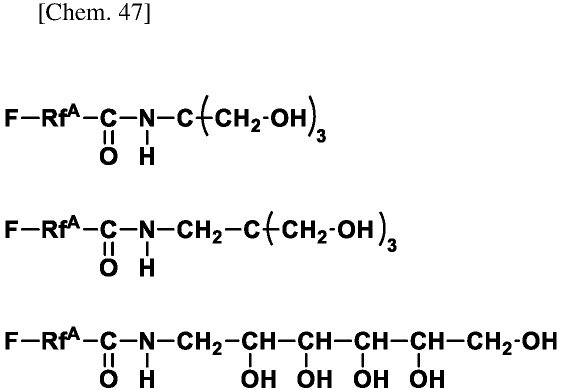 wherein Rf^{A} is as defined above.

Subsequently, a (meth)acrylic group is introduced into the fluorine-containing alcohol compound having the formula (7) obtained above, and thus a target fluorine-containing acrylic compound can be obtained.

Examples of the method of introducing a (meth)acrylic group into the fluorine-containing alcohol compound having the formula (7) include a method of reacting the fluorine-containing alcohol compound having the formula (7) with an isocyanate compound containing a (meth)acrylic group.

Examples of the isocyanate compound containing a (meth)acrylic group include those shown below.

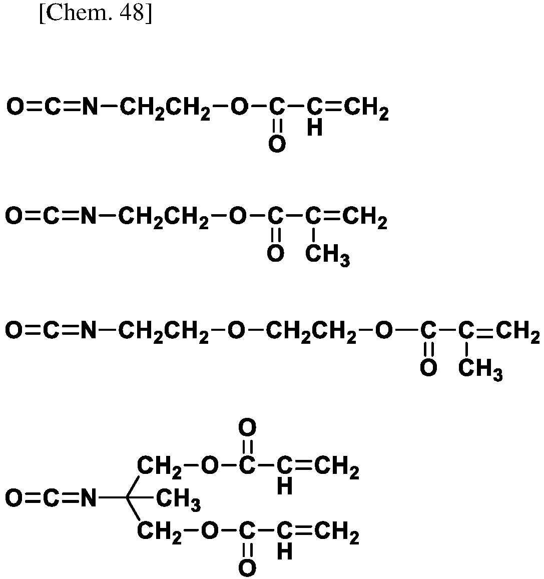

The number of moles of the isocyanate compound containing a (meth)acrylic group prepared and reacted may be equal to or more than the total number of moles of hydroxyl groups in the fluorine-containing alcohol compound, and thus all of the hydroxyl groups may be reacted. However, it is only required to introduce 1 mol or more of (meth)acrylic groups on average per mol of the fluorine-containing alcohol compound, and thus the amount of hydroxyl groups may be excessive so that the unreacted isocyanate compound containing a (meth)acrylic group does not remain. Specifically, when the amount of the fluorine-containing alcohol compound in the reaction system is x mol and the total amount of hydroxyl groups in the fluorine-containing alcohol compound is y mol, the amount of the isocyanate compound containing a (meth)acrylic group is desirably x mol or more and 2y mol or less, and particularly preferably 0.6y mol or more and 1.4y mol or less. If the amount is too small, there is a high possibility that the fluorine-containing alcohol compound into which a (meth)acrylic group is not introduced remains, and the target fluorine-containing acrylic compound may have low solubility. If the amount is too large, the unreacted isocyanate compound containing a (meth)acrylic group is difficult to remove.

At the time of the reaction, the reaction may be performed using an appropriate solvent for dilution as necessary. Such a solvent can be used without particular limitation as long as it does not react with the hydroxyl group in the fluorine-containing alcohol compound and the isocyanate group in the isocyanate compound containing a (meth)acrylic group, and specific examples of the solvent include hydrocarbon-based solvents such as toluene, xylene, and isooctane, ether-based solvents such as tetrahydrofuran (THF), diisopropyl ether, and dibutyl ether, ketone-based solvents such as acetone, methyl ethyl ketone, methyl butyl ketone, methyl isobutyl ketone, and cyclohexanone, fluorine-modified aromatic hydrocarbon-based solvents such as m-xylene hexafluoride [another name: metaxylene hexafluoride] and benzotrifluoride, and fluorine-modified ether-based solvents such as methyl perfluorobutyl ether. This solvent may be removed with a known method such as distillation under reduced pressure after the reaction, or may be used as a diluted solution as it is according to the intended use.

The amount of the solvent used is not particularly limited, and is preferably 10 times or less the total weight of the reaction components. If the amount of the solvent used is too large, the reaction rate may be significantly reduced.

At the time of the reaction, a polymerization inhibitor may be added as necessary. The polymerization inhibitor is not particularly limited, and one usually used as a polymerization inhibitor for an acrylic compound can be used. Specific examples of the polymerization inhibitor include hydroquinone, hydroquinone monomethyl ether, 4-tert-butylcatechol, and dibutylhydroxy toluene.

The amount of the polymerization inhibitor to be used is to be determined from the reaction conditions, the purification conditions after the reaction, and the final use conditions, and although not particularly limited, the amount is usually 0.01 to 5,000 ppm, and particularly preferably 0.1 to 500 ppm per the total weight of the reaction components.

At the time of the reaction, an appropriate catalyst may be added in order to increase the reaction rate. Examples of the catalyst include alkyltin ester compounds such as dibutyltin diacetate, dibutyltin dilaurate, dibutyltin dioctoate, dioctyltin diacetate, dioctyltin dilaurate, dioctyltin dioctoate, and stannous dioctanoate, titanates and titanium chelate compounds such as tetraisopropoxytitanium, tetra n-butoxytitanium, tetrakis(2-ethylhexoxy)titanium [another name: tetrakis(2-ethylhexyl) orthotitanate], dipropoxybis(acetylacetona)titanium, and titanium isopropoxyoctylene glycol, zirconium tetraacetylacetonate, zirconium tributoxymonoacetylacetonate, zirconium monobutoxyacetylacetonate bis(ethylacetoacetate), zirconium dibutoxy bis(ethylacetoacetate), zirconium tetraacetylacetonate, and zirconium chelate compounds. These catalysts can be used as a mixture of two or more kinds thereof without limitation to one kind, and titanium compounds and tin compounds are particularly preferably used from the viewpoint of reactivity.

The reaction rate can be increased by adding 0.01 to 2 wt%, preferably 0.05 to 1 wt% of these catalysts per the total weight of the reaction components.

The reaction is performed at a temperature of 0 to 120°C, preferably 10 to 70°C, for 1 minute to 500 hours, preferably 10 minutes to 48 hours. If the reaction temperature is too low, the reaction rate may be too slow, and if the reaction temperature is too high, polymerization of (meth)acrylic groups may occur as a side reaction.

After completion of the reaction, the unreacted isocyanate compound, the reaction solvent, and the like are removed with a method such as distillation, adsorption, filtration, or washing, and thus the fluorine-containing acrylic compound having the formula (1) can be obtained.

At the time of stopping the reaction, an alcohol compound such as methanol or ethanol may be added into the system to form a urethane bond with the unreacted isocyanate compound. The produced urethane (meth)acrylate can be removed in the same manner as in the case of the unreacted isocyanate compound, or can remain for use.

### [Component (B)]

The component (B) as a second essential component in the fluorine-containing acrylic composition of the present invention is composed of a fluorine-containing acrylic compound that is a linear polymer having a main chain of fluoropolyether, and the fluorine-containing acrylic compound has a molecular chain including 2 or more, preferably 2 to 5, and more preferably 2 to 4 (meth)acrylic groups at each terminal, and has 4 to 10, preferably 4 to 8 (meth)acrylic groups on average per molecule.

The present inventors have found that if the component (B) having the above-described structural characteristics is blended with the component (A), the component (B) functions as a compatibilizer of the component (A) and thus these compositions exhibit excellent solubility in an active energy ray-curable composition, and that if these compositions are added to the active energy ray-curable composition, excellent anti-fouling property and abrasion resistance can be imparted to a cured product layer surface.

Such a compound of the component (B) can be specifically represented by the fluorine-containing acrylic compound having the general formula (2): 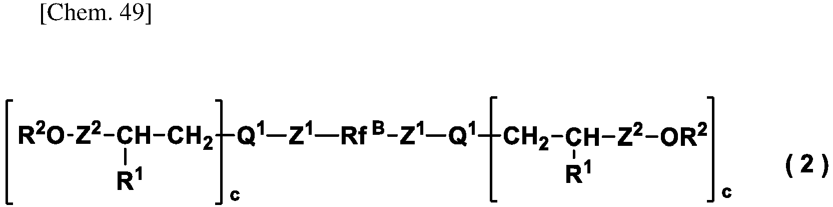 wherein Rf^{B} is a divalent perfluoropolyether group, Z¹ is independently a linking group composed of a divalent hydrocarbon group having 1 to 20 carbon atoms which may contain at least one heteroatom selected from an oxygen atom, a nitrogen atom, and a silicon atom, and which may contain a cyclic structure therein, with the proviso that a part of hydrogen atoms bonded to a carbon atom may be substituted with a fluorine atom, Q¹ is independently a (c+1)-valent linking group containing at least (c+1) number of silicon atoms (that is, tri- to hexa-valent linking group containing at least 3 silicon atoms), which may take a cyclic structure, c is independently an integer of 2 to 5, Z² is independently a divalent hydrocarbon group having 1 to 100 carbon atoms which may contain an oxygen atom and/or a nitrogen atom, and which may contain a cyclic structure therein, R¹ is independently a hydrogen atom or a monovalent hydrocarbon group having 1 to 8 carbon atoms, R² is independently a hydrogen atom or a monovalent organic group having a (meth)acrylic group which may contain an oxygen atom and/or a nitrogen atom, with the proviso that 2 or more R²s at each terminal per molecule and 4 to 10 R²s on average per molecule are the monovalent organic group.

In the formula (2), Rf^{B} is a divalent perfluoropolyether group, and can be exemplified by the examples of Rf^{A}. The following structure is particularly preferable as Rf^{B}:

-CF₂O-(CF₂O)ₚ₁(CF₂CF₂O)_{q1}-CF₂-

wherein p1, q1, and p1 + q1 are as defined above, and -(CF₂O)- and -(CF₂CF₂O)- are randomly arranged.

In the formula (2), Z¹ is independently a linking group composed of a divalent hydrocarbon group having 1 to 20 carbon atoms which may contain at least one heteroatom selected from an oxygen atom, a nitrogen atom, and a silicon atom, and which may contain a cyclic structure therein, with the proviso that a part of hydrogen atoms bonded to a carbon atom may be substituted with a fluorine atom. Examples of a preferred structure as such Z¹ include the following structural groups. In the following structures, the left bond hand is bonded to Rf^{B}, and the right bond hand is bonded to Q¹.

-CH₂CH₂-

-CH₂CH₂CH₂-

-CH₂CH₂CH₂CH₂-

-CH₂OCH₂CH₂-

-CH₂OCH₂CH₂CH₂-

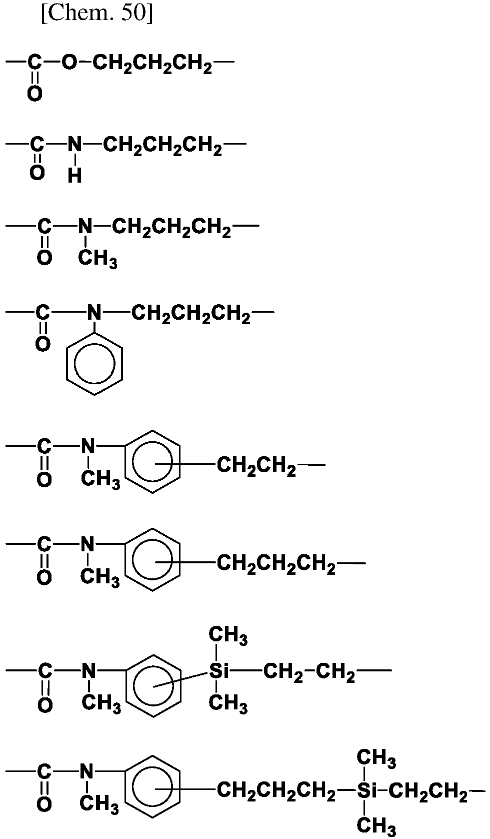

Among these,

-CH₂CH₂-

-CH₂CH₂CH₂-

-CH₂CH₂CH₂CH₂-

-CH₂OCH₂CH₂-

-CH₂OCH₂CH₂CH₂-

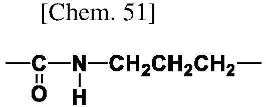

are particularly preferable.

In the formula (2), Q¹ is independently a (c+1)-valent linking group containing at least (c+1) number of silicon atoms (that is, tri- to hexa-valent linking group containing at least 3 silicon atoms), which may take a cyclic structure. Preferred examples of such Q¹ include a (c+1)-valent linking group composed of a siloxane structure, an unsubstituted or halogen-substituted silalkylene structure, a silarylene structure, or a combination of two or more thereof, each of which has at least (c+1) number of Si atoms. At this time, (c+1) number of bond hands are preferably included in the (c+1) number of Si atoms, respectively. Specifically, the following structures are shown as particularly preferred structures.

Note that in the following structures, c is the same as c in the formula (2), and is an integer of 2 to 5, preferably an integer of 2 to 4. k is an integer of 1 to 5, preferably an integer of 1 to 3. Arrangement of the units is random, and a bond hand of each of the (c+1) number of units and the like is bonded to any one of Z¹ and c number of X¹s enclosed in brackets [ ].

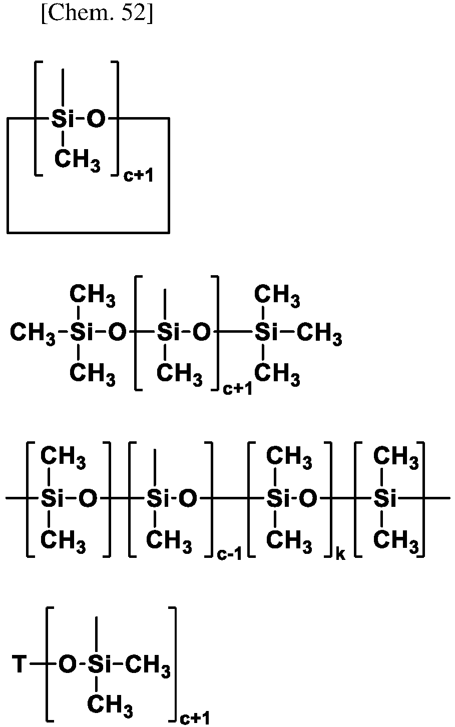

Here, T is a (c+1)-valent linking group (that is, tri- to hexa-valent linking group), and examples thereof include the following.

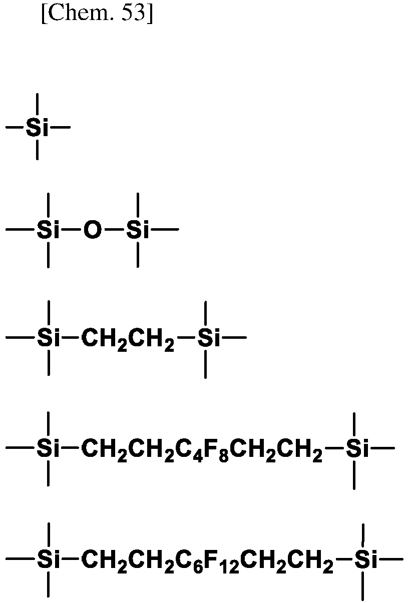

Among these, the following is particularly preferable as Q¹: 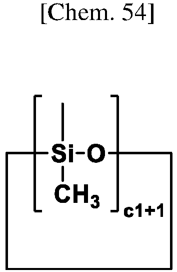 wherein c1 is 2 or 3.

In the formula (2), R¹ is independently a hydrogen atom or a monovalent hydrocarbon group having 1 to 8, preferably 1 to 6 carbon atoms, and specific examples of the monovalent hydrocarbon group include alkyl groups such as a methyl group, an ethyl group, a propyl group, an isopropyl group, a butyl group, an isobutyl group, a tert-butyl group, a pentyl group, a neopentyl group, a hexyl group, and an octyl group, cycloalkyl groups such as a cyclohexyl group, alkenyl groups such as a vinyl group, an allyl group, and a propenyl group, aryl groups such as a phenyl group, a tolyl group, and a xylyl group, and aralkyl groups such as a benzyl group and a phenylethyl group. R¹ is preferably a hydrogen atom or a methyl group.

In the formula (2), R² is independently a hydrogen atom or a monovalent organic group having a (meth)acrylic group which may contain an oxygen atom and/or a nitrogen atom, with the proviso that 2 or more R²s at each terminal per molecule and 4 to 10 R²s on average per molecule are the monovalent organic group. The monovalent organic group preferably have at least one, preferably one or two (meth)acrylic groups at its terminal. Furthermore, its structure may have an amide bond, an ether bond, an ester bond, or the like therein.

Examples of such a structure include the following.

-C(=O)CH=CH₂

-C(=O)C(CH₃)=CH₂

-C(=O)NHCH₂CH₂OC(=O)CH=CH₂

-C(=O)NHCH₂CH₂OC(=O)C(CH₃)=CH₂

-C(=O)NHCH₂CH₂OCH₂CH₂OC(=O)C(CH₃)=CH₂

-C(=O)NHC(CH₃)(CH₂CH₂OC(=O)CH=CH₂)₂

Among them, the following are particularly preferable.

-C(=O)NHCH₂CH₂OC(=O)CH=CH₂

-C(=O)NHCH₂CH₂OC(=O)C(CH₃)=CH₂

In the formula (2), c is independently an integer of 2 to 5, preferably an integer of 2 to 4, and more preferably 2 or 3. If c is less than 2, the solubility of the resulting fluorine-containing acrylic composition in an active energy ray-curable composition may deteriorate, and if c is more than 5, the solubility of the component (B) in the component (A) may deteriorate.

In the formula (2), Z² is independently a divalent hydrocarbon group having 1 to 100, preferably 1 to 40 carbon atoms which may contain an oxygen atom and/or a nitrogen atom, and which may contain a cyclic structure therein.

Examples of a preferred structure of Z² include the following. In the following structure, the left bond hand is bonded to CHR¹, and the right bond hand is bonded to OR².

-CH₂[OC₂H₄]_{f}[OC₃H₆]_{g}[OC₄H₈]ₕOCⱼH₂ⱼ-

In the formula, f is an integer of 0 to 29, preferably an integer of 0 to 10, g is an integer of 0 to 29, preferably an integer of 0 to 10, h is an integer of 0 to 14, preferably an integer of 0 to 7, and j is an integer of 2 to 4. The total number of carbon atoms in the structure is to be 3 to 100, preferably 3 to 30. Each repeating unit may be linear or branched, and the repeating units are randomly arranged regardless of their kinds. Each repeating unit may be a mixture of structural isomers, not a simple substance.

Examples of a particularly preferred structure as Z² include the following 2 structures, and among them, a structure in which f is an integer of 0 to 10 and g is an integer of 0 to 10 is preferable. In the following structures, the left bond hand is bonded to CHR¹, and the right bond hand is bonded to OR².

-CH₂[OC₂H₄]_{f}OC₂H₄-

-CH₂[OC₃H₆]_{g}OCH₂CH(CH₃)-

Each repeating unit may be linear or branched.

Examples of Z² include the following structures. In the following structures, the left bond hand is bonded to CHR¹, and the other bond hand is bonded to OR².

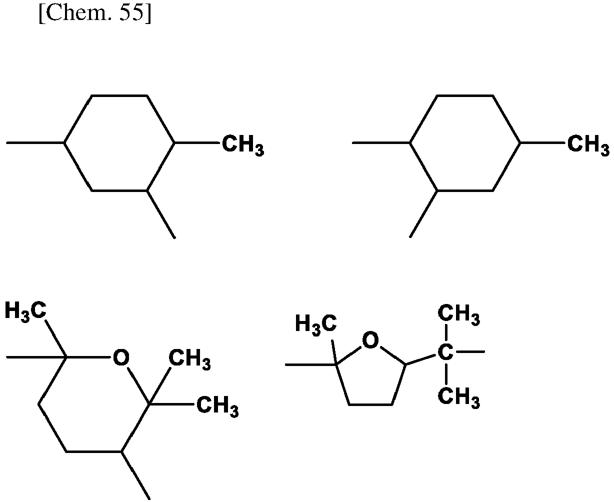

Examples of a more preferred structure as the fluorine-containing acrylic compound having the formula (2) include those having the following general formula (3) or (4): 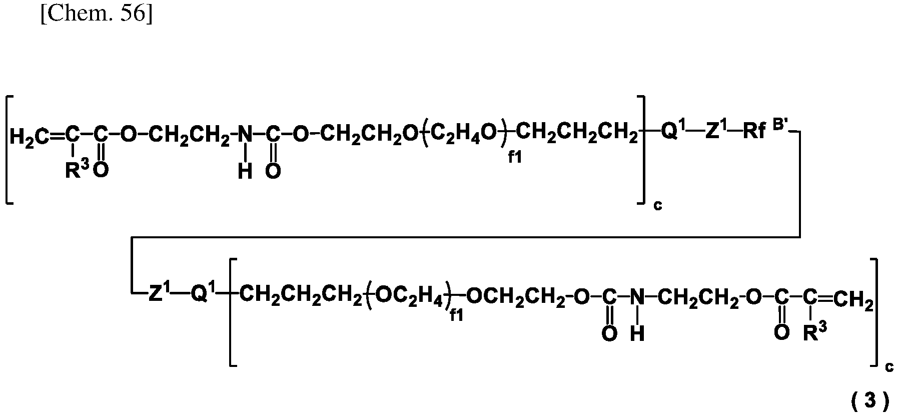 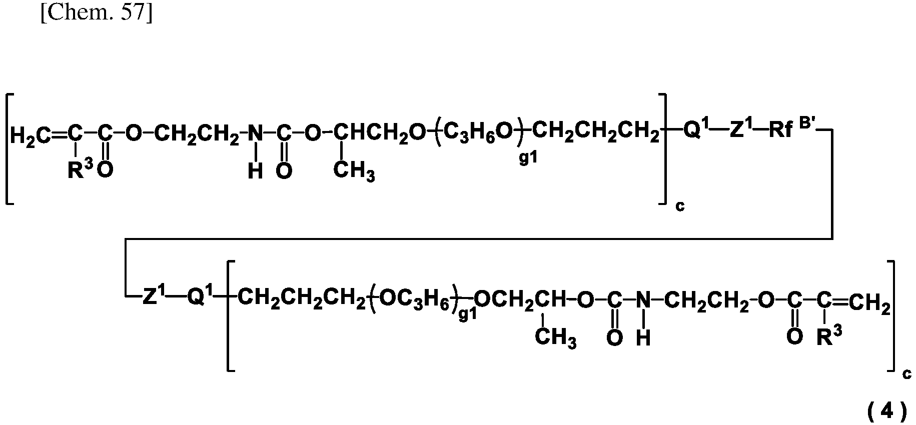 wherein Z¹, Q¹, and c are as defined above, Rf^{B,} is -CF₂O(CF₂O)ₚ₁(CF₂CF₂O)_{q1}CF₂-, p1, q1, and p1 + q1 are as defined above, -(CF₂O)- and -(CF₂CF₂O)- are randomly arranged, R³ is a hydrogen atom or a methyl group, f1 and g1 are an integer of 0 to 10, and each of the repeating units enclosed in parentheses appended with f1 and g1 may be linear or branched.

Specific examples of the component (B) include those shown below: 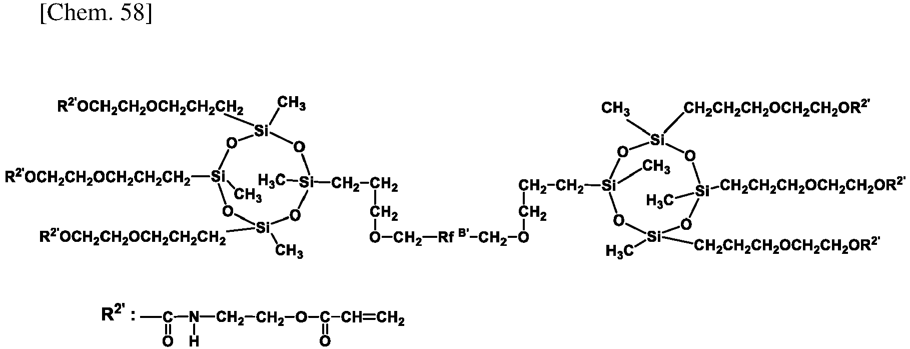 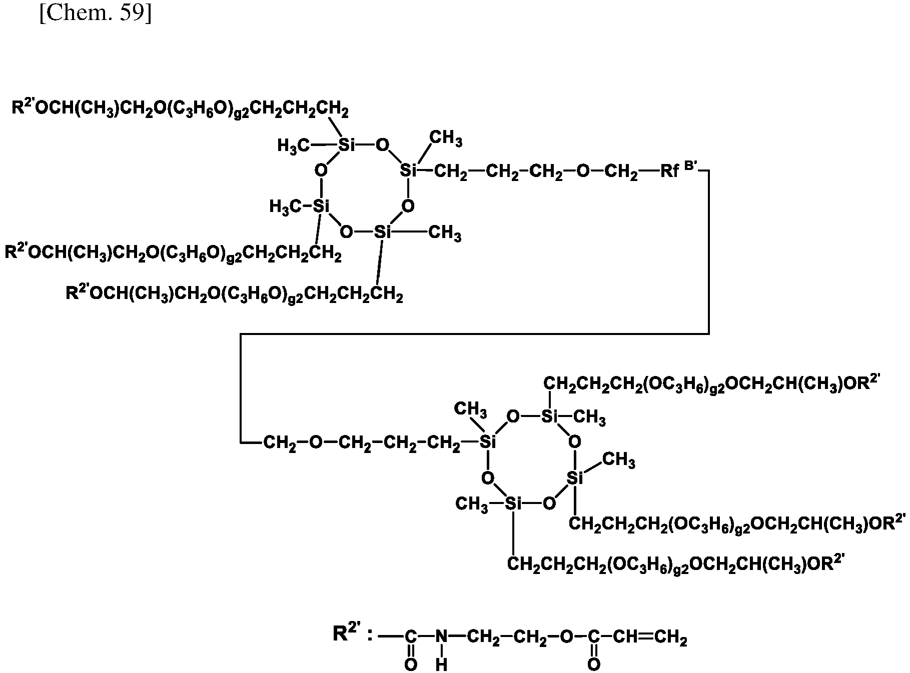 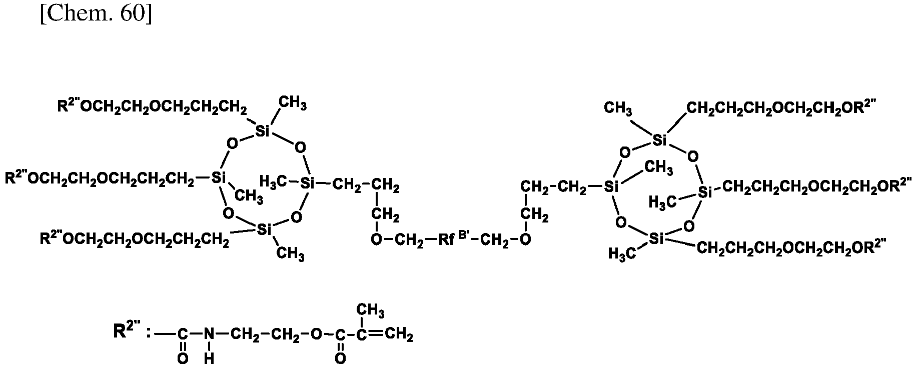 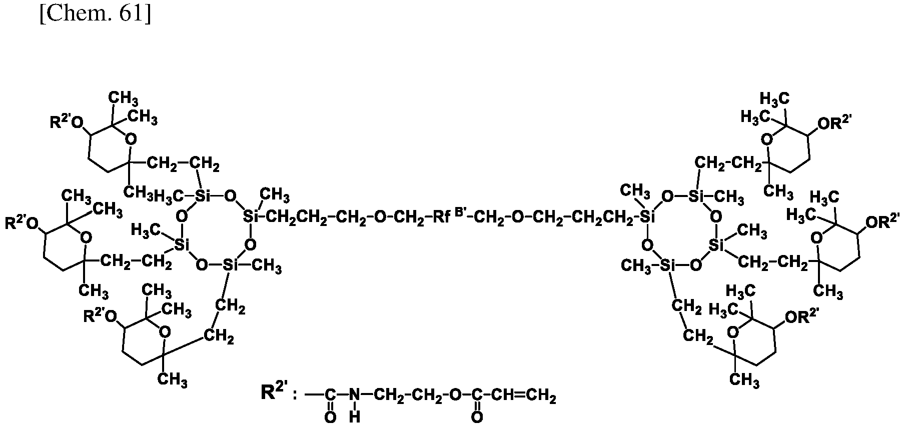 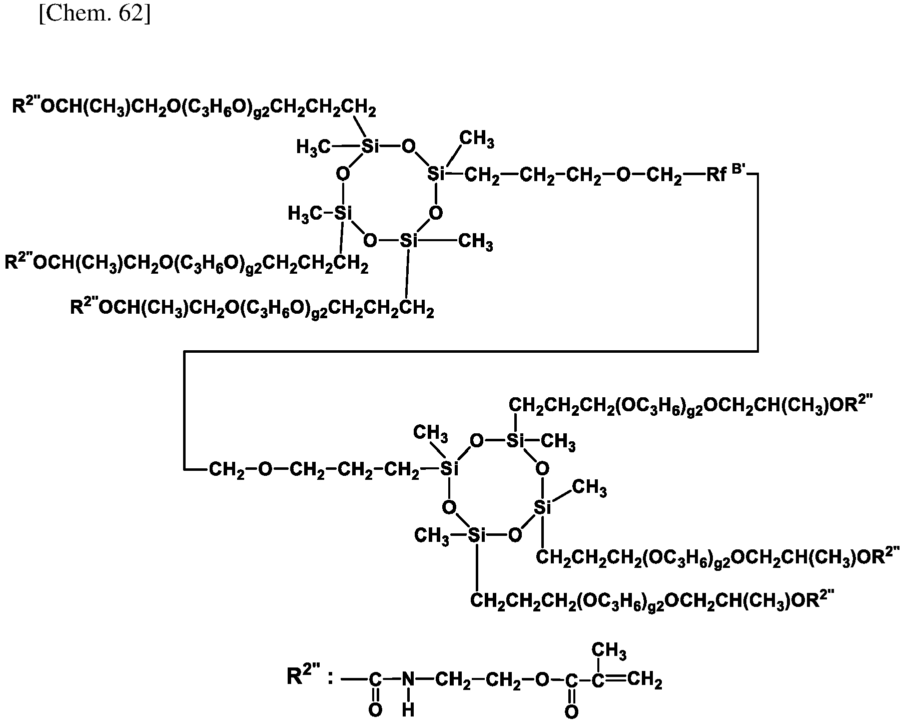 wherein Rf^{B,} is as defined above, g2 is an integer of 1 to 10, for example, 4, and the repeating unit enclosed in parentheses appended with g2 may be linear or branched.

The fluorine-containing acrylic compound having the formula (2) of the component (B) can be synthesized with, for example, a method disclosed in JP-A 2010-285501 or JP-A 2015-199910.

For example, in synthesis of the fluorine-containing acrylic compound having the formula (2), first, a fluoropolyether compound having a polyfunctional Si-H group having the following general formula (8): 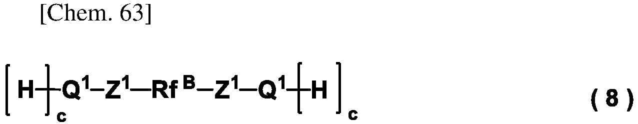 wherein Rf^{B}, Z¹, Q¹, and c are as defined above and the c number of Hs enclosed in brackets [ ] are all bonded to a silicon atom in the Q¹ structure and
a terminal unsaturated group-containing alcohol having the following general formula (9):

CH₂=CR¹-Z²-OH (9)

wherein R¹ and Z² are as defined above (a compound having an alkenyl group and a hydroxyl group at its molecular terminal) are subjected to a hydrosilylation reaction, and thus a fluorine-containing alcohol compound as an intermediate can be obtained.

Here, examples of the fluoropolyether compound having a polyfunctional Si-H group having the formula (8) include those shown below: 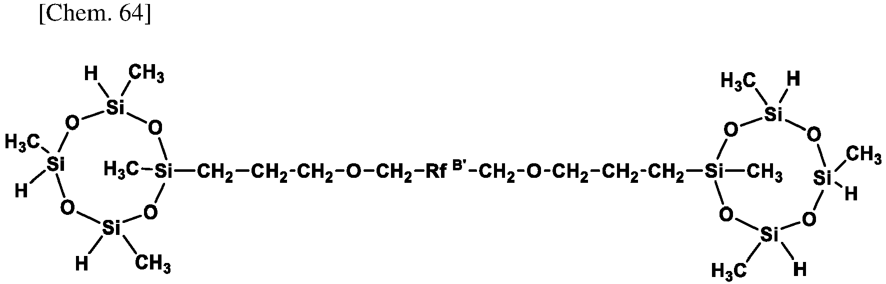 wherein Rf^{B,} is as defined above.

Examples of the terminal unsaturated group-containing alcohol having the formula (9) include those shown below:

CH₂=CH-CH₂-OCH₂CH₂-OH

CH₂=CH-CH₂-OCH₂CH(CH₃)-OH

CH₂=CH-CH₂-(OC₃H₆)₂-OCH₂CH(CH₃)-OH

CH₂=CH-CH₂-(OC₃H₆)₄-OCH₂CH(CH₃)-OH

CH₂=CH-CH₂-(OC₃H₆)₉-OCH₂CH(CH₃)-OH

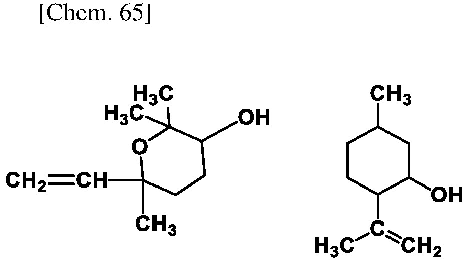

wherein the (OC₃H₆) unit may be linear or branched.

In this hydrosilylation (addition) reaction, it is desirable to mix the fluoropolyether compound having a polyfunctional Si-H group having the formula (8) with the terminal unsaturated group-containing alcohol having the formula (9) and perform a reaction at a reaction temperature of 50 to 150°C, preferably 60 to 120°C, for 1 minute to 48 hours, particularly 10 minutes to 12 hours in the presence of a platinum group metal-based addition reaction catalyst. If the reaction temperature is too low, the reaction may be stopped while the progress of the reaction is insufficient, and if it is too high, the reaction cannot be controlled due to an increase in temperature due to heat of reaction of hydrosilylation, and bumping, decomposition of raw materials, or the like may occur.

In this case, the reaction ratio between the fluoropolyether compound having a polyfunctional Si-H group having the formula (8) and the terminal unsaturated group-containing alcohol having the formula (9) is desirably such that the number of moles of the terminal unsaturated groups in the terminal unsaturated group-containing alcohol having the formula (9) used for the reaction is 0.5 to 5 times, particularly 0.9 to 2 times the total number of moles of the Hs enclosed in brackets [ ] in the fluoropolyether compound having a polyfunctional Si-H group having the formula (8). If the amount of the terminal unsaturated group-containing alcohol having the formula (9) is excessively smaller than the above-described amount, a fluorine-containing alcohol compound having high solubility may be difficult to obtain. If the amount of the terminal unsaturated group-containing alcohol is excessively larger than the above-described amount, the uniformity of the reaction solution deteriorates and the reaction rate becomes unstable, and when the terminal unsaturated group-containing alcohol having the formula (9) is removed after the reaction, conditions of heating, pressure reduction, extraction, and the like need to be further strict in correspondence with an increase in the amount of the terminal unsaturated group-containing alcohol excessive and unreacted.

As the addition reaction catalyst, for example, a compound containing a platinum group metal such as platinum, rhodium, or palladium can be used. Among them, a compound containing platinum is preferable, and platinum chloride, chloroplatinic acid, hexachloroplatinate(IV) hexahydrate, a platinum carbonylvinylmethyl complex, a chloroplatinic acid-vinylsiloxane complex (such as a platinum-divinyltetramethyldisiloxane complex or a platinum-cyclovinylmethylsiloxane complex), a platinum-octylaldehyde/octanol complex, or platinum supported on activated carbon can be used.

The compounding amount of the addition reaction catalyst is such that the amount of the contained metal is preferably 0.1 to 5,000 ppm by weight, more preferably 0.2 to 1,000 ppm by weight per the fluoropolyether compound having a polyfunctional Si-H group having the formula (8).

The above addition reaction can be performed without a solvent, but a solvent may be used for dilution as necessary. At this time, as the diluent solvent, a widely and generally used organic solvent can be used such as toluene, xylene, or isooctane, and a diluent solvent is preferable that has a boiling point equal to or higher than a target reaction temperature, does not inhibit the reaction, and can dissolve the fluorine-containing alcohol compound produced after the reaction at the reaction temperature. Preferred examples of such a solvent include partially fluorine-modified solvents including fluorine-modified aromatic hydrocarbon-based solvents such as m-xylene hexafluoride and benzotrifluoride, and fluorine-modified ether-based solvents such as methyl perfluorobutyl ether, and m-xylene hexafluoride is particularly preferable.

When a solvent is used, the amount of the solvent used is preferably 5 to 2,000 parts by weight, and more preferably 50 to 500 parts by weight per 100 parts by weight of the fluoropolyether compound having a polyfunctional Si-H group having the formula (8). If less than the above-described amount of a solvent is used, a dilution effect by the solvent becomes low, and if more than the above-described amount of a solvent is used, the degree of dilution becomes too high, and the reaction rate may be reduced.

After completion of the reaction, the unreacted terminal unsaturated group-containing alcohol having the formula (9) and the diluent solvent are preferably removed with a known method such as distillation under reduced pressure, extraction, or adsorption, or the reaction mixture containing these can also be used for the next reaction as it is.

As described above, the fluoropolyether compound having a polyfunctional Si-H group having the general formula (8) and the terminal unsaturated group-containing alcohol having the general formula (9) are subjected to a hydrosilylation reaction to obtain a fluorine-containing alcohol compound having the following general formula (10): 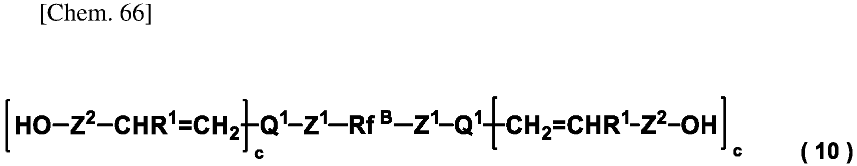 wherein Rf^{B}, Q¹, R¹, Z¹, Z², and c are as defined above, and c number of CH₂s enclosed in each pair of brackets [ ] are all bonded to a silicon atom in the Q¹ structure.

Examples of the fluorine-containing alcohol compound having the formula (10) obtained as described above include those shown below: 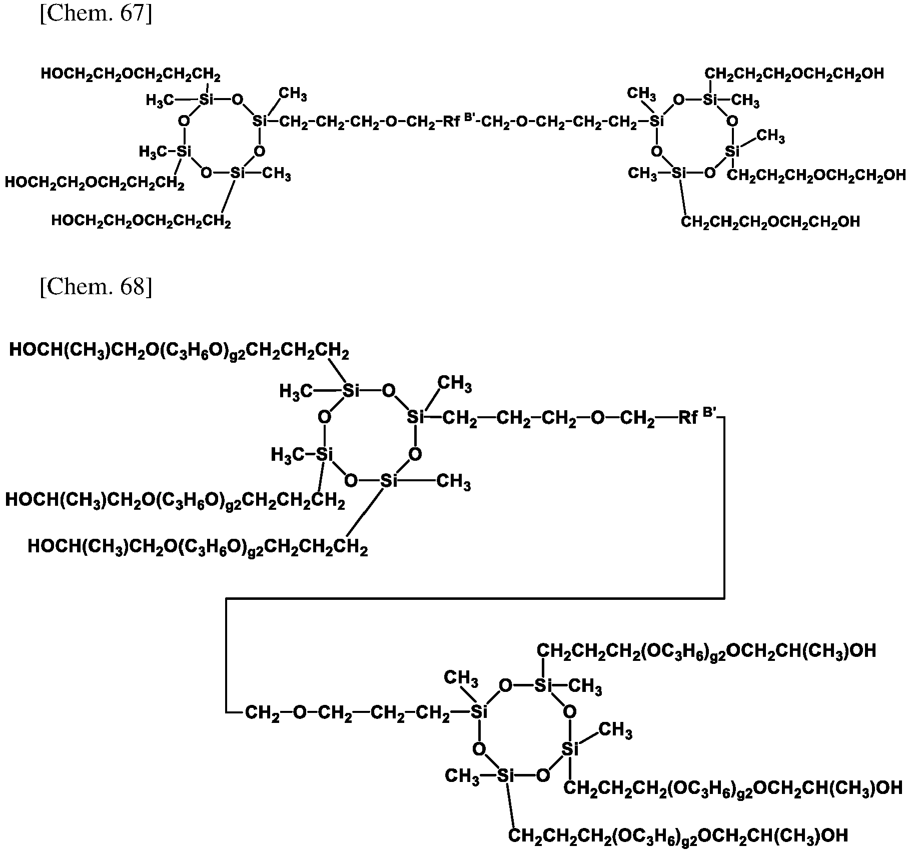 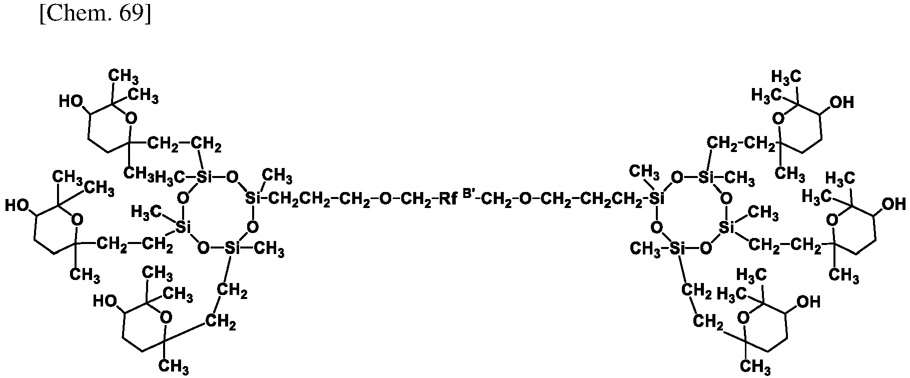 wherein Rf^{B}, and g2 are as defined above, and the repeating unit enclosed in parentheses appended with g2 may be linear or branched.

Subsequently, a (meth)acrylic group is introduced into the fluorine-containing alcohol compound having the formula (10) obtained above, and thus a target fluorine-containing acrylic compound can be obtained.

Examples of the method of introducing a (meth)acrylic group into the fluorine-containing alcohol compound having the formula (10) include a method of reacting the fluorine-containing alcohol compound having the formula (10) with a (meth)acrylic acid halide having the following formula (11) to form an ester, and another method of reacting the fluorine-containing alcohol compound having the formula (10) with an isocyanate compound containing a (meth)acrylic group having the following formula (12). With these methods, a fluorine-containing acrylic compound having the formula (2) can be obtained.

XC(=O)CR³=CH₂ (11)

O=C=N-CH₂CH₂OC(=O)CR³=CH₂ (12)

wherein R³ is as defined above, and X is a halogen atom such as a fluorine atom, a chlorine atom, or a bromine atom.

Here, examples of the (meth)acrylic acid halide having the formula (11) include those shown below:

XC(=O)CH=CH₂

XC(=O)C(CH₃)=CH₂

wherein X is as defined above.

Particularly, acrylic acid chloride and methacrylic acid chloride are preferable.

Examples of the isocyanate compound containing a (meth)acrylic group having the formula (12) include those shown below.

O=C=N-CH₂CH₂OC(=O)CH=CH₂

O=C=N-CH₂CH₂OC(=O)C(CH₃)=CH₂

The number of moles of the (meth)acrylic acid halide or the isocyanate compound containing a (meth)acrylic group prepared and reacted may be equal to or more than the total number of moles of hydroxyl groups in the fluorine-containing alcohol compound, and thus all of the hydroxyl groups may be reacted. However, it is only required to introduce 1 mol or more of (meth)acrylic groups on average per mol of the fluorine-containing alcohol compound, and thus the amount of hydroxyl groups may be excessive so that the unreacted (meth)acrylic acid halide or isocyanate compound containing a (meth)acrylic group does not remain. Specifically, when the amount of the fluorine-containing alcohol compound in the reaction system is x mol and the total amount of hydroxyl groups in the fluorine-containing alcohol compound is y mol, the amount of the (meth)acrylic acid halide or the isocyanate compound containing a (meth)acrylic group is desirably x mol or more and 2y mol or less, and particularly preferably 0.6y mol or more and 1.4y mol or less. If the amount is too small, there is a high possibility that the fluorine-containing alcohol compound into which a (meth)acrylic group is not introduced remains, and the target fluorine-containing acrylic compound may have low solubility. If the amount is too large, the unreacted (meth)acrylic acid halide or isocyanate compound containing a (meth)acrylic group is difficult to remove.

These reactions may be performed using an appropriate solvent for dilution as necessary. Such a solvent can be used without particular limitation as long as it does not react with the hydroxyl group in the fluorine-containing alcohol compound, the halogen atom in the (meth)acrylic acid halide, and the isocyanate group in the isocyanate compound containing a (meth)acrylic group, and specific examples of the solvent include hydrocarbon-based solvents such as toluene, xylene, and isooctane, ether-based solvents such as tetrahydrofuran (THF), diisopropyl ether, and dibutyl ether, ketone-based solvents such as acetone, methyl ethyl ketone, methyl butyl ketone, methyl isobutyl ketone, and cyclohexanone, fluorine-modified aromatic hydrocarbon-based solvents such as m-xylene hexafluoride and benzotrifluoride, and fluorine-modified ether-based solvents such as methyl perfluorobutyl ether. This solvent may be removed with a known method such as distillation under reduced pressure after the reaction, or may be used as a diluted solution as it is according to the intended use.

The amount of the solvent used is not particularly limited, and is preferably 10 times or less the total weight of the reaction components. If the amount of the solvent used is too large, the reaction rate may be significantly reduced.

At the time of the reaction, a polymerization inhibitor may be added as necessary. The polymerization inhibitor is not particularly limited, and one usually used as a polymerization inhibitor for an acrylic compound can be used. Specific examples of the polymerization inhibitor include hydroquinone, hydroquinone monomethyl ether, 4-tert-butylcatechol, and dibutylhydroxy toluene.

The amount of the polymerization inhibitor to be used is to be determined from the reaction conditions, the purification conditions after the reaction, and the final use conditions, and although not particularly limited, the amount is usually 0.01 to 5,000 ppm, and particularly preferably 0.1 to 500 ppm per the total weight of the reaction components.

In the case of reacting the (meth)acrylic acid halide with the fluorine-containing alcohol compound, it is particularly preferable to react acrylic acid chloride or methacrylic acid chloride to produce an ester. For the ester formation reaction, the (meth)acrylic acid halide is added dropwise while the reaction intermediate (fluorine-containing alcohol compound) and an acid acceptor are mixed and stirred. As the acid acceptor, triethylamine, pyridine, urea, or the like can be used.

The amount of the acid acceptor used is desirably about 0.9 to 3 times the number of moles of the (meth)acrylic acid halide added. If the amount is too small, a large amount of acid not trapped remains, and if the amount is too large, the excess acid acceptor is difficult to remove.

The (meth)acrylic acid halide is added dropwise over 20 to 60 minutes while the temperature of the reaction mixture is maintained at 0 to 35°C. Thereafter, stirring is further continued for 30 minutes to 10 hours. After completion of the reaction, the unreacted (meth)acrylic acid halide, a salt generated by the reaction, the reaction solvent, and the like are removed with a method such as distillation, adsorption, filtration, or washing, and thus the fluorine-containing acrylic compound having the formula (2) can be obtained.

At the time of stopping the reaction, an alcohol compound such as methanol or ethanol may be added into the system to esterify the unreacted (meth)acrylic acid halide. The produced (meth)acrylic acid ester can be removed in the same manner as in the case of removing the unreacted (meth)acrylic acid halide, or can remain for use.

In the case of the reaction between the fluorine-containing alcohol compound and the isocyanate compound containing a (meth)acrylic group, the fluorine-containing alcohol compound and the isocyanate compound containing a (meth)acrylic group are stirred together with a solvent as necessary to proceed the reaction.

In this reaction, an appropriate catalyst may be added in order to increase the reaction rate. Examples of the catalyst include alkyltin ester compounds such as dibutyltin diacetate, dibutyltin dilaurate, dibutyltin dioctoate, dioctyltin diacetate, dioctyltin dilaurate, dioctyltin dioctoate, and stannous dioctanoate, titanates and titanium chelate compounds such as tetraisopropoxytitanium, tetra n-butoxytitanium, tetrakis(2-ethylhexoxy)titanium [another name: tetrakis(2-ethylhexyl) orthotitanate], dipropoxybis(acetylacetona)titanium, and titanium isopropoxyoctylene glycol, zirconium tetraacetylacetonate, zirconium tributoxymonoacetylacetonate, zirconium monobutoxyacetylacetonate bis(ethylacetoacetate), zirconium dibutoxy bis(ethylacetoacetate), zirconium tetraacetylacetonate, and zirconium chelate compounds. These catalysts can be used as a mixture of two or more kinds thereof without limitation to one kind, and titanium compounds and tin compounds having a low influence on the environment are particularly preferably used.

The reaction rate can be increased by adding 0.01 to 2 wt%, preferably 0.05 to 1 wt% of these catalysts per the total weight of the reaction components.

The reaction is performed at a temperature of 0 to 120°C, preferably 10 to 70°C, for 1 minute to 500 hours, preferably 10 minutes to 48 hours. If the reaction temperature is too low, the reaction rate may be too slow, and if the reaction temperature is too high, polymerization of (meth)acrylic groups may occur as a side reaction.

After completion of the reaction, the unreacted isocyanate compound, the reaction solvent, and the like are removed with a method such as distillation, adsorption, filtration, or washing, and thus the fluorine-containing acrylic compound having the formula (2) can be obtained.

At the time of stopping the reaction, an alcohol compound such as methanol or ethanol may be added into the system to form a urethane bond with the unreacted isocyanate compound. The produced urethane (meth)acrylate can be removed in the same manner as in the case of the unreacted isocyanate compound, or can remain for use.

In the fluorine-containing acrylic composition of the present invention, it is desirable that the compounding amount of the component (A) per 100 parts by weight of the component (B) be 1 to 400 parts by weight, preferably 2 to 200 parts by weight, and particularly preferably in the range of 3 to 100 parts by weight. If the amount of the component (A) per the amount of the component (B) is excessively larger than the above-described amount, the solubility in an active energy ray-curable composition may be too poor and cause application failure, and if the amount of the component (A) is excessively smaller than the above-described amount, there is no difference from the case of using the component (B) alone.

The fluorine-containing acrylic composition of the present invention essentially contains the two components (A) and (B) described above, and can contain only these components and be cured by heat, an electron beam, or the like. However, the fluorine-containing acrylic composition can also contain a component other than these two components according to workability and necessity.

The fluorine-containing acrylic composition of the present invention is useful as an anti-fouling additive or the like for imparting liquid repellency, anti-fouling property, and abrasion resistance to an ultraviolet-curable or thermosetting composition or the like such as a hard coating agent, a coating material, or an antireflection coating.

The second embodiment of the present invention is a fluorine-containing active energy ray-curable composition characterized by comprising 0.005 to 100 parts by weight, preferably 0.01 to 50 parts by weight of the fluorine-containing acrylic composition of the first embodiment of the present invention per 100 parts by weight of the active energy ray-curable composition (E) described later. If the compounding amount of the compound is smaller than the above-described amount, the compound cannot be sufficiently disposed on the surface when a cured product is formed, and expected liquid repellency and anti-fouling property cannot be exhibited. If the compounding amount is larger than the above-described amount, an influence of the fluorine-containing acrylic composition on the strength and the hardness of the cured product layer becomes too large, and cured product characteristics of the original active energy ray-curable composition are lost.

The active energy ray-curable composition (E) used in the second embodiment of the present invention is not particularly limited as long as it gives a cured product by irradiation with an active energy ray such as an ultraviolet ray or an electron beam, and the active energy ray-curable composition (E) particularly preferably contains a non-fluorinated acrylic compound (a) and a photopolymerization initiator (b).

The non-fluorinated acrylic compound (a) can be used regardless of whether it is monofunctional or polyfunctional. The non-fluorinated acrylic compound (a) particularly preferably contains an acrylic compound having two or more acrylic groups per molecule.

As such an acrylic compound, one having two or more acrylic groups or α-substituted acrylic groups per molecule can be used, and suitable examples thereof include di- to hexa-functional (meth)acrylic compounds such as 1,6-hexanediol di(meth)acrylate, neopentyl glycol di(meth)acrylate, ethylene glycol di(meth)acrylate, ethylene oxide isocyanurate-modified di(meth)acrylate, EO-isocyanurate modified tri(meth)acrylate, trimethylolpropane tri(meth)acrylate, pentaerythritol tri(meth)acrylate, glycerol tri(meth)acrylate, tris(meth)acryloyloxyethyl phosphate, (2,2,2-tri-(meth)acryloyloxymethyl)ethyl hydrogen phthalate, glycerol tri(meth)acrylate, pentaerythritol tetra(meth)acrylate, ditrimethylolpropane tetra(meth)acrylate, dipentaerythritol penta(meth)acrylate, dipentaerythritol hexa(meth)acrylate, and sorbitol hexa(meth)acrylate, epoxy acrylates obtained by adding these (meth)acrylic compounds to ethylene oxide, propylene oxide, epichlorohydrin, fatty acids, alkyl-modified products, and epoxy resins, and copolymers obtained by introducing a (meth)acryloyl group into a side chain of an acrylic acid ester copolymer.

Moreover, urethane acrylates, products obtained by reacting polyisocyanate with a (meth)acrylate having a hydroxyl group, products obtained by reacting polyisocyanate and a polyester of a terminal diol with a (meth)acrylate having a hydroxyl group, and products obtained by reacting polyisocyanate obtained by reacting a polyol with an excess amount of diisocyanate with a (meth)acrylate having a hydroxyl group can also be used. Among them, suitable examples thereof include urethane acrylates obtained by reacting a (meth)acrylate having a hydroxyl group selected from 2-hydroxyethyl(meth)acrylate, 2-hydroxy-3-acryloyloxypropylmethacrylate, and pentaerythritol triacrylate with a polyisocyanate selected from hexamethylene diisocyanate, isophorone diisocyanate, tolylene diisocyanate, lysine diisocyanate, norbornane diisocyanate, 1,3-bis(isocyanatomethyl) cyclohexane, methylene bis(4-cyclohexyl isocyanate), 2-methyl-1,3-diisocyanatocyclohexane, 2-methyl-1,5-diisocyanatocyclohexane, and diphenylmethane diisocyanate.

In addition, it may be a polyfunctional acrylic compound having two or more acrylic groups or α-substituted acrylic groups per molecule, but free of a urethane bond, or a mixture of at least two kinds of acrylic compounds including said polyfunctional acrylic compound and one of polyfunctional urethane acrylates having three or more acrylic groups or α-substituted acrylic groups per molecule obtained by reacting an aliphatic polyisocyanate with a hydroxy-containing acrylic compound.

In this case, examples of the polyfunctional acrylic compound having two or more acrylic groups or α-substituted acrylic groups per molecule, but free of a urethane bond include trimethylolpropane tri(meth)acrylate, pentaerythritol tri(meth)acrylate, glycerol tri(meth)acrylate, pentaerythritol tetra(meth)acrylate, ditrimethylolpropane tetra(meth)acrylate, dipentaerythritol penta(meth)acrylate, dipentaerythritol hexa(meth)acrylate, sorbitol hexa(meth)acrylate, and the foregoing compounds modified with ethylene oxide or propylene oxide.

In addition, examples of the polyfunctional urethane acrylates having three or more acrylic groups or α-substituted acrylic groups per molecule, which is obtained by reacting an aliphatic polyisocyanate with a hydroxy-containing acrylic compound include products which are obtained from reaction of a di- or polyfunctional polyisocyanate (obtained by reacting any one of hexamethylene diisocyanate, norbornane diisocyanate, isophorone diisocyanate, and trimers thereof, and di- and trifunctional isocyanates thereof, with an aliphatic diol, aliphatic polyol or a polyacrylate having a hydroxy group on a side chain), with any one of trimethylolpropane di(meth)acrylate, glycerin di(meth)acrylate, bis(2-(meth)acryloyloxyethyl)hydroxyethyl isocyanurate, pentaerythritol tri(meth)acrylate, ditrimethylolpropane tri(meth)acrylate, dipentaerythritol penta(meth)acrylate, and the foregoing compounds modified with ethylene oxide or propylene oxide; and products which are obtained from reaction of an aliphatic polyol, a polyacrylate having a hydroxy group on a side chain, and an acrylic compound having an isocyanate group such as 2-isocyanatoethyl (meth)acrylate or 1,1-bis(acryloyloxymethyl)ethyl isocyanate.

Furthermore, the component (a) may include not only a liquid component but also a component obtained by modifying a surface of a particulate high-molecular-weight body or a surface of inorganic filler fine particles with an acrylic group.

The component (a) as described above can be used alone, but it can also be used by blending a plurality of corresponding compounds in order to enhance coatability and characteristics of the coating film after curing.

In the fluorine-containing active energy ray-curable composition of the present invention, the above-described fluorine-containing acrylic composition is preferably blended so that the amount of the fluorine-containing acrylic compound of the component (A) is 0.01 to 2 wt%, particularly 0.05 to 0.5 wt% per the total weight of the acrylic compounds in the fluorine-containing active energy ray-curable composition (total weight of the components (A) and (B) in the fluorine-containing acrylic composition and the component (a) in the active energy ray-curable composition (E)). The fluorine-containing acrylic composition is further preferably blended so that the amount of the fluorine-containing acrylic compound of the component (B) is 0.01 to 10 wt%, particularly 0.1 to 5 wt% per the total weight of the acrylic compounds in the fluorine-containing active energy ray-curable composition (total weight of the components (A) and (B) in the fluorine-containing acrylic composition and the component (a) in the active energy ray-curable composition (E)).

In addition, by containing a photopolymerization initiator as the component (b), a curable composition having enhanced curability when ultraviolet rays are used as active energy rays can be obtained.

The photopolymerization initiator as the component (b) is not particularly limited as long as it can cure the acrylic compound by ultraviolet irradiation, and preferably, examples thereof include acetophenone, benzophenone, 2,2-dimethoxy-1,2-diphenylethan-1-one, 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, 2-methyl-1-(4-methylthiophenyl)-2-morpholinopropan-1-one, 2-benzyl-2-dimethylamino-1-(4-morpholinophenyl) butanone-1, 2-(dimethylamino)-2-[(4-methylphenyl)methyl]-1-[4-(4-morpholinyl)phenyl]-1-butanone, 2,4,6-trimethylbenzoyl-diphenyl-phosphine oxide, bis(2,4,6-trimethylbenzoyl)-phenylphosphine oxide, 1,2-octanedione-1-[4-(phenylthio)-2-(o-benzoyloxime)], ethanone-1-[9-ethyl-6-(2-methylbenzoyl)-9H-carbazol-3-yl]-1-(O-acetyloxime), and 2-hydroxy-1-{4-[4-(2-hydroxy-2-methylpropionyl)benzyl]phenyl}-2-methylpropan-1-one, and one kind thereof may be used alone or two or more kinds thereof may be used in combination.

The content of the component (b) can be appropriately determined according to curing conditions and physical properties of the cured product of the intended active energy ray-curable composition (E), but for example, it is desirable that the content be 0.1 to 15 parts by weight, particularly 1 to 10 parts by weight, per 100 parts by weight of the total of the component (a). If the added amount is smaller than this, curability may deteriorate, and if it is larger than this, an influence on physical properties after curing may be increased.

In addition, since the fluorine-containing acrylic composition of the present invention is excellent in compatibility with a non-fluorine-based organic solvent, it is not necessary to add a volatile fluorine compound as a compatibilizer in preparation of the fluorine-containing active energy ray-curable composition. Therefore, for example, even when the content of the volatile fluorine compound is 1 part by weight or less (0 to 1 parts by weight), particularly 0.1 parts by weight or less (0 to 0.1 parts by weight) per 100 parts by weight of the above-described active energy ray-curable composition (E), a uniform fluorine-containing active energy ray-curable composition can be prepared.

To the active energy ray-curable composition (E), an active energy ray-reactive compound other than an acrylic group, such as a thiol compound or a maleimide compound, an organic solvent, a polymerization inhibitor, an antistatic agent, an antifoaming agent, a viscosity modifier, a light resistant stabilizer, a heat resistant stabilizer, an antioxidant, a surfactant, a colorant, a polymer or inorganic filler, and the like can be also blended. The structure thereof is not particularly limited, and known ones can be used without impairing an object of the present invention.

Also, as the active energy ray-curable composition (E), as an active energy ray-curable composition in which the components (a) and (b) and various additives are blended, existing compositions commercially available in classification of paint, ink, hard coating agent, and the like from each company may be used as a part or whole of the active energy ray-curable composition. Even when a commercially available hard coating agent or the like is used as described above, an organic solvent, a polymerization inhibitor, an antistatic agent, an antifoaming agent, a viscosity modifier, a light resistant stabilizer, a heat resistant stabilizer, an antioxidant, a surfactant, a colorant, a filler, and the like can be additionally blended according to the purpose.

Examples of the organic solvent include alcohols such as 1-propanol, 2-propanol, isopropyl alcohol, n-butanol, isobutanol, tert-butanol, and diacetone alcohol, ketones such as methyl propyl ketone, diethyl ketone, methyl ethyl ketone, methyl isobutyl ketone, and cyclohexanone, ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate, esters such as propyl acetate, butyl acetate, and cyclohexyl acetate, and aromatics such as toluene, xylene, triethylbenzene, and alkylbenzenes. The solvents may be used singly or in combination of two or more kinds thereof.

The amount of the solvent used is not particularly limited, and is preferably 20 to 10,000 parts by weight, and particularly preferably 100 to 1,000 parts by weight per 100 parts by weight of the total of the active energy ray-curable composition (E).

The polymerization inhibitor, the antistatic agent, the antifoaming agent, the viscosity modifier, the light resistant stabilizer, the heat resistant stabilizer, the antioxidant, the surfactant, the colorant, and the filler are not particularly limited, and known ones can be used without impairing an object of the present invention.

Furthermore, the by-products generated in producing the components (A) and (B) in the fluorine-containing acrylic composition of the present invention, the remaining unreacted components, and the like may be contained without impairing an object and an effect of the present invention. Such a component is considered to be, for example, one in a case where the fluorine-containing alcohol compound having the formula (7) or the formula (10) described above remains as an unreacted component.

In the fluorine-containing active energy ray-curable composition of the present invention, the fluorine-containing acrylic composition may be added to the active energy ray-curable composition (E) with a method in which the active energy ray-curable composition (E) and the fluorine-containing acrylic composition are mixed, a method in which the fluorine-containing acrylic composition is added and mixed together with each component of the active energy ray-curable composition at the time of preparing the active energy ray-curable composition (E), or a method in which each component of the active energy ray-curable composition and the components (A) and (B) constituting the fluorine-containing acrylic composition are simultaneously added and mixed.

The method of curing the fluorine-containing active energy ray-curable composition of the present invention is not particularly limited. The composition appropriately diluted with a solvent and applied can be cured by heat or an active energy ray such as an electron beam, or the composition further containing a photopolymerization initiator as the component (b) can be cured by an ultraviolet ray. In the case of curing with an ultraviolet ray, ultraviolet irradiation can be performed in air. In order to prevent curing inhibition by oxygen, the oxygen concentration is preferably suppressed to 5,000 ppm or less, and curing is particularly preferably performed in an atmosphere of an inert gas such as nitrogen, carbon dioxide, or argon.

In a general use form of the fluorine-containing active energy ray-curable composition of the present invention, the fluorine-containing active energy ray-curable composition can be applied onto any substrate as long as the fluorine-containing active energy ray-curable composition layer of the present invention after curing is adhered or bonded to the substrate, and examples of the substrate particularly include substrates of resins such as polyethylene terephthalate, polybutylene terephthalate, polyethylene naphthalate, polyethylene, polypropylene, cellophane, diacetyl cellulose, triacetyl cellulose, acetyl cellulose butyrate, cellulose acetate propionate, a cycloolefin polymer, cycloolefin copolymers, polyvinyl chloride, polyvinylidene chloride, polyvinyl alcohol, an ethylene-vinyl acetate copolymer, polystyrene, polycarbonate, polymethylpentene, polysulfone, polyether ether ketone, polyethersulfone, polyether imide, polyimides, a fluororesin, nylon, and an acrylic resin. On the surfaces of these substrates having any form such as a film, a plate, or a molded member, the fluorine-containing active energy ray-curable composition can be used.

In the case of application to a film substrate, a structure may be adopted in which a pressure-sensitive adhesive agent is applied to a surface opposite from the surface on which the fluorine-containing active energy ray-curable composition layer is applied and formed, and a release film for protection of the pressure-sensitive adhesive agent may be further disposed.

The film substrate may be a substrate composed of only the above-described resin film, or may be a film substrate in which a primer layer is provided on the resin film in order to improve adhesion with the fluorine-containing active energy ray-curable composition of the present invention. Examples of the primer layer include those made of a polyester-based resin, a urethane-based resin, an acryl-based resin, or the like.

The fluorine-containing active energy ray-curable composition of the present invention may also be applied and cured on a curable composition layer that is cured or uncured and does not correspond to the present invention. For example, the fluorine-containing active energy ray-curable composition of the present invention can be applied to cover a cured product layer that is further high in hardness, durability, an antistatic property, and resistance to deformation such as curling.

For the purpose of improving adhesion to the fluorine-containing active energy ray-curable composition of the present invention, the surface of the resin film can be treated by a surface roughening treatment with a sandblasting method, a solvent treatment method, or the like, a corona discharge treatment, a chromic acid treatment, a flame treatment, a hot air treatment, an ozone/ultraviolet irradiation treatment, an oxidation treatment, or the like.

The method of applying the fluorine-containing active energy ray-curable composition of the present invention to the substrate or an article is not particularly limited, and for example, a known coating method can be used such as roll coating, gravure coating, flow coating, curtain coating, dip coating, spray coating, spin coating, bar coating, or screen printing.

After coating, the coating film can be irradiated with an active energy ray to be cured. Here, as the active energy ray, any beam such as an electron beam or an ultraviolet ray can be used, and an ultraviolet ray is particularly preferable. As an ultraviolet ray source, a mercury lamp, a metal halide lamp, and an LED lamp are suitable. An ultraviolet irradiation dose is desirably in the range of 10 to 10,000 mJ/cm², particularly 100 to 4,000 mJ/cm², because if it is too small, an uncured component remains, and if it is too large, the coating film and the substrate may deteriorate.

In addition, in order to prevent curing inhibition by oxygen, irradiation atmosphere may be replaced with an inert gas free of oxygen molecules such as nitrogen, carbon dioxide, or argon at the time of ultraviolet irradiation as described above, the surface of the coating film may be covered with an ultraviolet-permeable protective layer having releasability, and the coating film surface may be irradiated with ultraviolet ray from above, or in a case where the substrate has ultraviolet permeability, the surface of the coating film may be covered with a releasable protective layer, and then the coating film surface may be irradiated with ultraviolet ray from the side opposite from the coated surface of the substrate. In order to effectively perform leveling of the coating film or polymerization of the (meth)acrylic groups in the coating film, the coating film and the substrate may be heated by an arbitrary method with an infrared ray or a hot air drying furnace before and during ultraviolet irradiation.

The thickness of the cured product layer of the fluorine-containing active energy ray-curable composition thus obtained is not particularly limited, and is preferably 0.01 to 5,000 µm, and particularly preferably 0.05 to 200 µm.

The cured product layer of the fluorine-containing active energy ray-curable composition of the present invention thus obtained preferably can have, at room temperature (25°C), a water/oil-repellent surface that has a static water contact angle of 100° or more, particularly 105° or more obtained by measuring the angle formed by a droplet of 2 µL of ion-exchanged water 1 second after contact of the droplet with the layer between the liquid surface and the solid surface, and has a static oleic acid contact angle of 60° or more, particularly 65° or more obtained by measuring the angle formed by a droplet of 2 µL of oleic acid 1 second after contact of the droplet with the layer between the liquid surface and the solid surface. In order to obtain the above-described contact angles, the amount of the fluorine-containing active energy ray-curable composition layer of the present invention is preferably such that the cured product layer has a thickness of 10 nm or more on average over the total surface area of the layer. On the surface of the cured product layer, it is preferable that unreacted (meth)acrylic groups do not remain, and therefore the cured product layer is desirably cured under an atmosphere of an inert gas such as nitrogen or carbon dioxide.

As described above, the fluorine-containing active energy ray-curable composition of the present invention can be cured by an active energy ray such as an ultraviolet ray, and can form a cured product layer excellent in anti-fouling property and abrasion resistance on the surface of an article.

Furthermore, the present invention provides, as a third embodiment, an article having a cured coating film (cured product layer) obtained by applying the above-described fluorine-containing active energy ray-curable composition of the present invention to the surface and curing the fluorine-containing active energy ray-curable composition. As described above, if the fluorine-containing active energy ray-curable composition of the present invention is used, a cured coating film (cured product layer) having excellent surface characteristics can be formed on the surface of a substrate (article). In particular, it is useful for imparting water repellency, oil repellency, and anti-fouling property to a surface of acrylic hard coat. This makes it difficult for human fat such as fingerprints, sebum, and sweat, stain due to cosmetics and the like, machine oil, and the like to adhere, and a hard coat surface excellent in wiping property can be provided to a substrate. Therefore, the fluorine-containing active energy ray-curable composition of the present invention can provide an anti-fouling coating film or a protective film for surfaces of, for example, a substrate (article) that may be stained by human fat, cosmetics, or the like when touched by a human, and a process material film used inside a machine that may be strained by human fat of an operator, machine oil, or the like.

The cured coating film (cured product layer) formed using the fluorine-containing active energy ray-curable composition of the present invention is useful as a coating film and a surface protective film for housings of various devices such as tablet computers, notebook PCs, portable (communication) information terminals such as mobile phones and smartphones, digital media players, and electronic book readers, various flat panel displays such as watch-type and glasses-type wearable computers, head mounted displays, liquid crystal displays, plasma displays, organic EL (electroluminescence) displays, back projection displays, vacuum fluorescent displays (VFD), field emission projection displays, CRT, toner-based displays, and quantum dot (QD) displays, display operation device surfaces such as screens of TVs, various optical films used inside these displays and devices, transparent glass or transparent plastic (such as acryl or polycarbonate) members such as exterior of automobiles, glossy surfaces of piano and furniture, surfaces of building stone such as marble, decorative building materials of water section such as toilet, bath, and washroom, protective glass for art exhibition, window glass for show windows, showcases, covers for photo frames, glass for wristwatch, exterior of cosmetic containers, exterior of ornament containers, automobile windows, window glass for trains, aircrafts, and the like, and automobile headlights and tail lamps, cover members for vehicle sensors such as a millimeter wave radar, various mirror members, and the like.

In particular, the cured coating film (cured product layer) is useful as a surface protective film for various devices having a display input device for an operation on a screen with a finger or a palm of a person, such as touch panel displays, for example, tablet computers, notebook PCs, smartphones, mobile phones, other portable (communication) information terminals, smartwatches, digital media players, electronic book readers, digital photo frames, game machines, digital cameras, digital video cameras, GPS display recording devices, navigation devices for automobiles and the like, control panels for automobiles and the like, automated teller machines, automatic cash dispensers, automatic vending machines, digital signage (electronic signage), security system terminals, POS terminals, various controllers such as remote controllers, display input devices such as panel switches for in-vehicle devices, and the like.

Furthermore, the cured coating film formed from the fluorine-containing active energy ray-curable composition of the present invention is also useful as a surface protective film for optical recording media such as magneto-optical disks and optical disks, optical components and optical devices such as eyeglass lenses, prisms, lens sheets, pellicle films, polarizing plates, optical filters, lenticular lenses, Fresnel lenses, antireflection films, lenses for various cameras, protective filters for various lenses, optical fibers, and optical couplers.

The fluorine-containing active energy ray-curable composition of the present invention as described above is essentially characterized in that the fluoropolyether structures in the compounds of the components (A) and (B) in the fluorine-containing acrylic composition of the present invention are disposed on the surface of a target article to impart excellent properties such as water repellency, oil repellency, slippage, anti-fouling property, fingerprint inconspicuousness, fingerprint wiping property, abrasion resistance, low refractive index property, solvent resistance, and chemical resistance.

At the time of using such a fluorine-containing acrylic composition of the present invention, an appropriate method of use is to be selected based on known techniques corresponding to each use according to the combination of the formulations, the composition ratio, and the characteristics to be emphasized. Such known techniques can be considered within the range of not only methods for compositions containing fluorine but also methods used for existing active energy ray-curable compositions.

In the case of applying the fluorine-containing active energy ray-curable composition of the present invention to obtain an article, for example, at the time of coating a film substrate, a screening operation is performed to select procedures based on combinations of existing conditions according to the characteristics, and examples of the procedures include adjustment to obtain an appropriate coating film thickness in order to prevent interference fringes, thickness adjustment of the film substrate to easily suppress curling, and elastic modulus adjustment of the substrate film to suppress deformation of the fluorine-containing active energy ray-curable composition after curing of the coating film and cracking of the coating film, and such procedures can be easily achieved by combinations of the present invention and existing techniques.

### EXAMPLES

Hereinafter, the present invention is described specifically with reference to Synthesis Examples, Examples, and Comparative Examples, but the present invention is not limited to the following Examples. Measurements and evaluations in Examples and Comparative Examples were performed at room temperature (25°C) unless otherwise specified.

### [Synthesis Example 1] Synthesis of fluorine-containing acrylic compound (A-1)

Under a dry nitrogen atmosphere,
100 g (0.027 mol) of a compound having an average structure of the following formula (I): 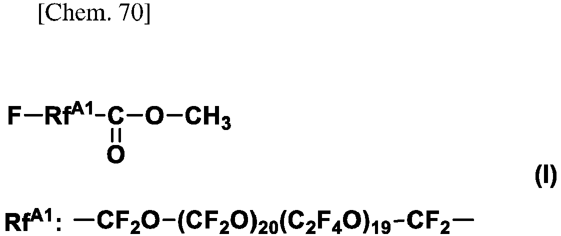 with the proviso that the repeating units enclosed in parentheses are randomly arranged,
5.0 g (0.082 mol) of a compound having the following formula: 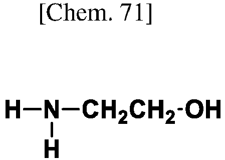 and 100 g of m-xylene hexafluoride were mixed, and the resulting mixture was stirred at 25°C for 8 hours under a dry nitrogen atmosphere. In IR of the reaction liquid, disappearance of a band derived from a -C(=O)-O- bond was confirmed. The resulting reaction liquid was washed with water and then distilled off under reduced pressure to obtain 97.1 g of a fluorine-containing alcohol compound (II) having the following structure: 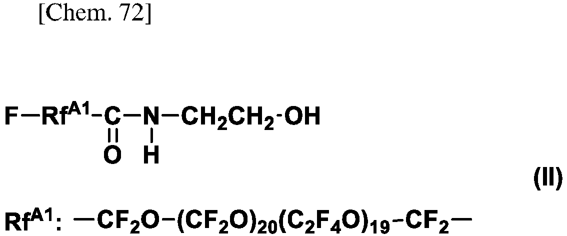
with the proviso that the repeating units enclosed in parentheses are randomly arranged.

Under a dry air atmosphere, 50.0 g of THF and 2.0 g (0.014 mol) of acryloyloxyethyl isocyanate were mixed with 50.0 g of the fluorine-containing alcohol compound (II) (having an amount of hydroxyl groups of 0.014 mol) obtained by the above-described method, and the mixture was heated to 50°C. To the mixture, 0.15 g of tetrakis(2-ethylhexyl) orthotitanate was added, and the resulting mixture was stirred at 50°C for 24 hours. After completion of the heating, distillation under reduced pressure was performed to obtain 49.1 g of a liquid high-viscosity substance. From the results of ¹H-NMR and IR, the substance was confirmed to be a fluorine-containing acrylic compound (A-1) shown below: 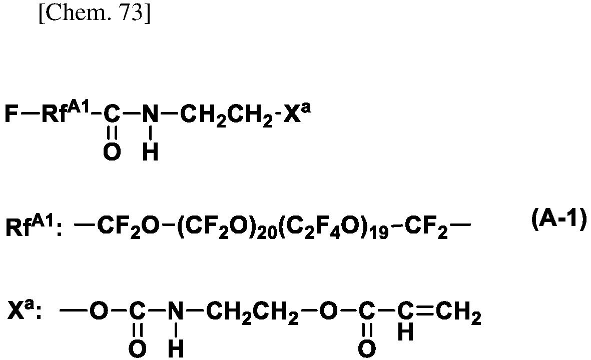 with the proviso that the repeating units enclosed in parentheses are randomly arranged.

### [Synthesis Example 2] Synthesis of fluorine-containing acrylic compound (A-2)

Under a dry nitrogen atmosphere,
100 g (0.027 mol) of a compound having an average structure of the following formula (I): 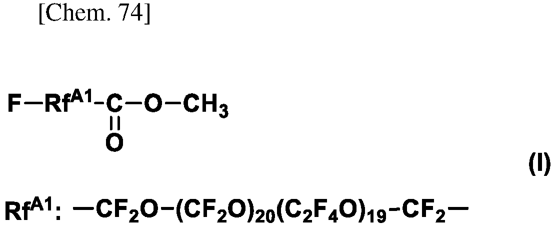 with the proviso that the repeating units enclosed in parentheses are randomly arranged,
7.5 g (0.082 mol) of a compound having the following formula: 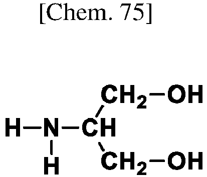 and 100 g of m-xylene hexafluoride were mixed, and the resulting mixture was stirred at 25°C for 8 hours under a dry nitrogen atmosphere. In IR of the reaction liquid, disappearance of a band derived from a -C(=O)-O- bond was confirmed. The resulting reaction liquid was washed with water and then distilled off under reduced pressure to obtain 96.3 g of a fluorine-containing alcohol compound (III) having the following structure: 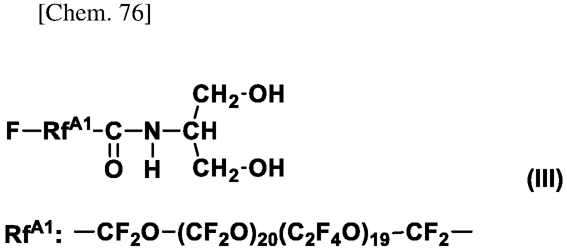 with the proviso that the repeating units enclosed in parentheses are randomly arranged.

Under a dry air atmosphere, 50.0 g of THF and 3.8 g (0.027 mol) of acryloyloxyethyl isocyanate were mixed with 50.0 g of the fluorine-containing alcohol compound (III) (having an amount of hydroxyl groups of 0.027 mol) obtained by the above-described method, and the mixture was heated to 50°C. To the mixture, 0.15 g of tetrakis(2-ethylhexyl) orthotitanate was added, and the resulting mixture was stirred at 50°C for 24 hours. After completion of the heating, distillation under reduced pressure was performed to obtain 50.7 g of a liquid high-viscosity substance. From the results of ¹H-NMR and IR, the substance was confirmed to be a fluorine-containing acrylic compound (A-2) shown below: 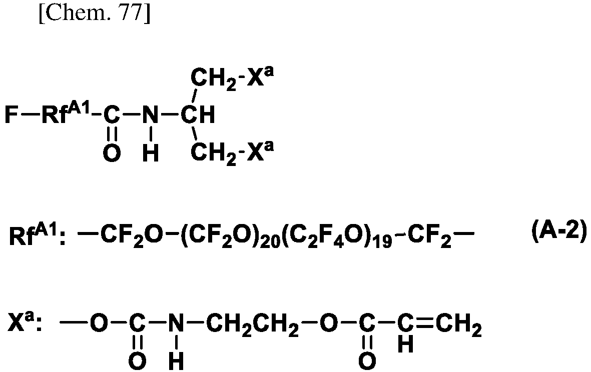 with the proviso that the repeating units enclosed in parentheses are randomly arranged.

### [Synthesis Example 3] Synthesis of fluorine-containing acrylic compound (A-3)

Under a dry nitrogen atmosphere,
100 g (0.027 mol) of a compound having an average structure of the following formula (I): 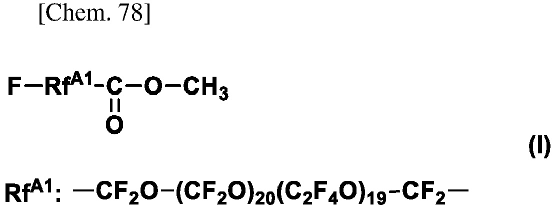 with the proviso that the repeating units enclosed in parentheses are randomly arranged,
9.9 g (0.082 mol) of a compound having the following formula: 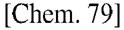 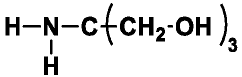 and 100 g of m-xylene hexafluoride were mixed, and the resulting mixture was stirred at 65°C for 8 hours under a dry nitrogen atmosphere. In IR of the reaction liquid, disappearance of a band derived from a -C(=O)-O- bond was confirmed. The resulting reaction liquid was washed with water and then distilled off under reduced pressure to obtain 94.4 g of a fluorine-containing alcohol compound (IV) having the following structure: 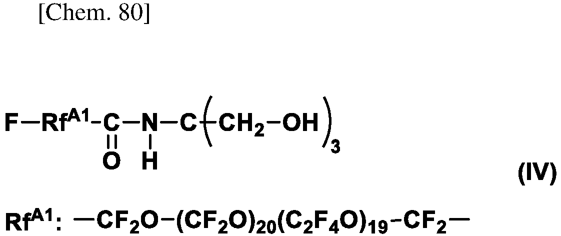 with the proviso that the repeating units enclosed in parentheses are randomly arranged.

Under a dry air atmosphere, 50.0 g of THF and 5.6 g (0.040 mol) of acryloyloxyethyl isocyanate were mixed with 50.0 g of the fluorine-containing alcohol compound (IV) (having an amount of hydroxyl groups of 0.040 mol) obtained by the above-described method, and the mixture was heated to 50°C. To the mixture, 0.15 g of tetrakis(2-ethylhexyl) orthotitanate was added, and the resulting mixture was stirred at 50°C for 24 hours. After completion of the heating, distillation under reduced pressure was performed to obtain 52.0 g of a liquid high-viscosity substance. From the results of ¹H-NMR and IR, the substance was confirmed to be a fluorine-containing acrylic compound (A-3) shown below: 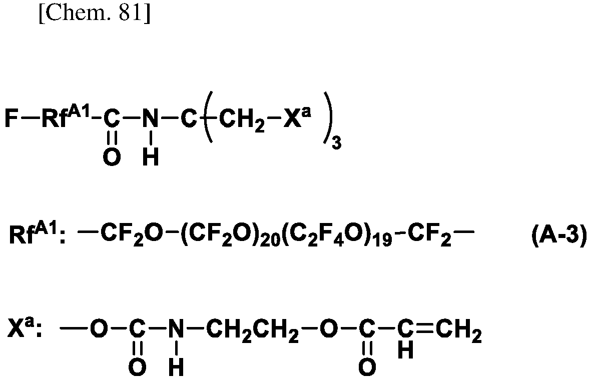 with the proviso that the repeating units enclosed in parentheses are randomly arranged.

### [Synthesis Example 4] Synthesis of fluorine-containing acrylic compound (A-4)

Under a dry nitrogen atmosphere,
100 g (0.027 mol) of a compound having an average structure of the following formula (I): 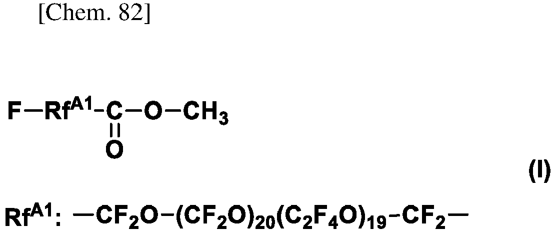 with the proviso that the repeating units enclosed in parentheses are randomly arranged,
14.9 g (0.082 mol) of a compound having the following formula: 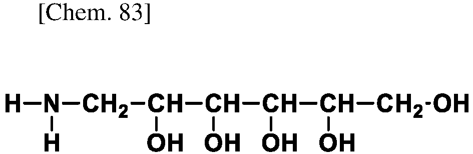 and 100 g of m-xylene hexafluoride were mixed, and the resulting mixture was stirred at 65°C for 8 hours under a dry nitrogen atmosphere. In IR of the reaction liquid, disappearance of a band derived from a -C(=O)-O- bond was confirmed. The resulting reaction liquid was washed with water and then distilled off under reduced pressure to obtain 90.3 g of a fluorine-containing alcohol compound (V) having the following structure: 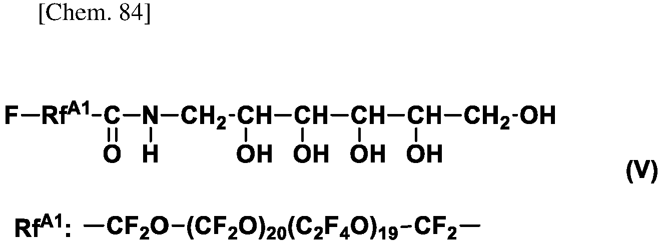 with the proviso that the repeating units enclosed in parentheses are randomly arranged.

Under a dry air atmosphere, 50.0 g of THF and 9.2 g (0.065 mol) of acryloyloxyethyl isocyanate were mixed with 50.0 g of the fluorine-containing alcohol compound (V) (having an amount of hydroxyl groups of 0.065 mol) obtained by the above-described method, and the mixture was heated to 50°C. To the mixture, 0.15 g of tetrakis(2-ethylhexyl) orthotitanate was added, and the resulting mixture was stirred at 50°C for 24 hours. After completion of the heating, distillation under reduced pressure was performed to obtain 47.8 g of a high-viscosity substance. From the results of ¹H-NMR and IR, the substance was confirmed to be a fluorine-containing acrylic compound (A-4) shown below: 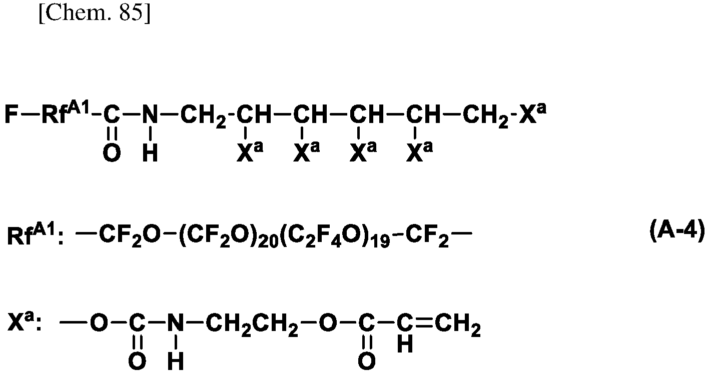 with the proviso that the repeating units enclosed in parentheses are randomly arranged.

### [Synthesis Example 5] Synthesis of fluorine-containing acrylic compound (A-5)

Under a dry air atmosphere, 50.0 g of THF and 6.5 g (0.027 mol) of (bisacryloyloxymethyl)ethyl isocyanate were mixed with 50.0 g of the fluorine-containing alcohol compound (III) (having an amount of hydroxyl groups of 0.027 mol) obtained by the method in Synthesis Example 2, and the mixture was heated to 50°C. To the mixture, 0.15 g of tetrakis(2-ethylhexyl) orthotitanate was added, and the resulting mixture was stirred at 50°C for 24 hours. After completion of the heating, distillation under reduced pressure was performed to obtain 49.7 g of a high-viscosity substance. From the results of ¹H-NMR and IR, the substance was confirmed to be a fluorine-containing acrylic compound (A-5) shown below: 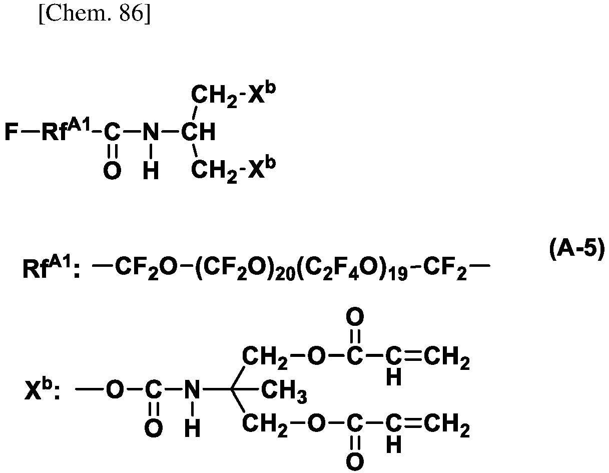 with the proviso that the repeating units enclosed in parentheses are randomly arranged.

### [Synthesis Example 6] Synthesis of fluorine-containing acrylic compound (A-6)

Under a dry air atmosphere, 50.0 g of THF and 2.2 g (0.014 mol) of methacryloyloxyethyl isocyanate were mixed with 50.0 g of the fluorine-containing alcohol compound (II) (having an amount of hydroxyl groups of 0.014 mol) obtained by the method in Synthesis Example 1, and the mixture was heated to 50°C. To the mixture, 0.15 g of tetrakis(2-ethylhexyl) orthotitanate was added, and the resulting mixture was stirred at 50°C for 24 hours. After completion of the heating, distillation under reduced pressure was performed to obtain 47.7 g of a high-viscosity substance. From the results of ¹H-NMR and IR, the substance was confirmed to be a fluorine-containing acrylic compound (A-6) shown below: 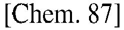 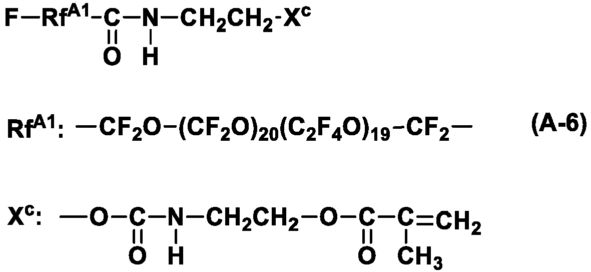 with the proviso that the repeating units enclosed in parentheses are randomly arranged.

### [Synthesis Example 7] Synthesis of fluorine-containing acrylic compound (B-1)

A 5,000 mL three-necked flask equipped with a reflux device and a stirrer was charged under a dry nitrogen atmosphere with 1,000 g (0.25 mol) of perfluoropolyether having the following formula:

CH₂=CH-CH₂-O-CH₂-Rf^{B1}-CH₂-O-CH₂-CH=CH₂

Rf^{B1}: -CF₂O(CF₂CF₂O)_{20.9}(CF₂O)_{21.2}CF₂-

with the proviso that the repeating units enclosed in parentheses are randomly arranged, 1,400 g of m-xylene hexafluoride, and 722 g (3.0 mol) of tetramethylcyclotetrasiloxane, and heated to 90°C while stirring the mixture. Thereto was added 0.884 g of a toluene solution of a platinum/1,3-divinyl-tetramethyldisiloxane complex (containing 2.2×10⁻⁶ mol as Pt alone), and stirring was continued for 4 hours while internal temperature was maintained at 90°C or more. After confirming disappearance of the allyl group of raw material by ¹H-NMR, the solvent and excess tetramethylcyclotetrasiloxane were distilled off under reduced pressure. Thereafter, activated carbon treatment was performed to obtain 993 g of a colorless and transparent liquid compound (VI) having the following formula:

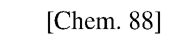

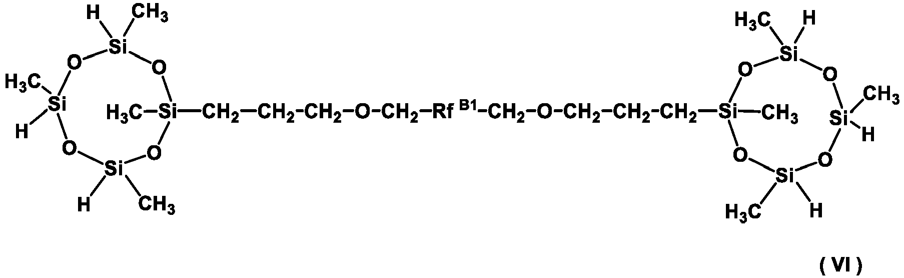

Rf^{B1}: -CF₂O(CF₂CF₂O)_{20.9}(CF₂O)_{21.2}CF₂-

with the proviso that the repeating units enclosed in parentheses are randomly arranged.

Under a dry air atmosphere, 7.05 g (0.069 mol) of 2-allyloxyethanol, 50.0 g of m-xylene hexafluoride, and 0.0442 g of a toluene solution of a chloroplatinic acid/vinylsiloxane complex (platinum-1,3-divinyl-tetramethyldisiloxane complex) (containing 1.1×10⁻⁷ mol as Pt alone) were mixed with 50.0 g of the compound (VI) (having an amount of Si-H groups of 0.066 mol) obtained above, and the mixture was stirred at 100°C for 4 hours. After confirming disappearance of the Si-H group by ¹H-NMR and IR, the solvent and excess 2-allyloxyethanol were distilled off under reduced pressure, and activated carbon treatment was performed to obtain 54.9 g of a pale yellow and transparent liquid fluorine-containing alcohol compound (VII) having the following formula:

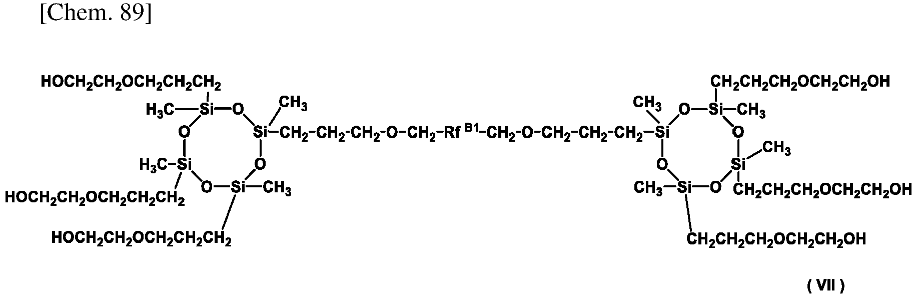

Rf^{B1}: -CF₂O(CF₂CF₂O)_{20.9}(CF₂O)_{21.2}CF₂-

with the proviso that the repeating units enclosed in parentheses are randomly arranged.

Under a dry air atmosphere, 50.0 g of THF and 9.0 g (0.064 mol) of acryloyloxyethyl isocyanate were mixed with 50.0 g of the fluorine-containing alcohol compound (VII) (having an amount of hydroxyl groups of 0.058 mol) obtained, and the mixture was heated to 50°C. To the mixture, 0.15 g of tetrakis(2-ethylhexyl) orthotitanate was added, and the resulting mixture was stirred at 50°C for 24 hours. After completion of the heating, distillation under reduced pressure was performed to obtain 58.5 g of a pale yellow pasty substance. From the results of ¹H-NMR and IR, the substance was confirmed to be a fluorine-containing acrylic compound (B-1) shown below:

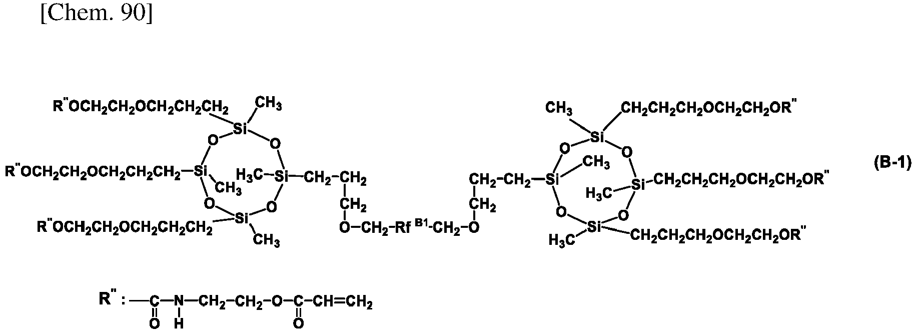

Rf^{B1}: -CF₂O(CF₂CF₂O)_{20.9}(CF₂O)_{21.2}CF₂-

with the proviso that the repeating units enclosed in parentheses are randomly arranged.

### [Synthesis Example 8] Synthesis of fluorine-containing acrylic compound (B-2)

A 500 mL three-necked flask equipped with a reflux device and a stirrer was charged under a dry nitrogen atmosphere with 100 g (0.050 mol) of perfluoropolyether having the following formula:

CH₂=CH-CH₂-O-CH₂-Rf^{B2}-CH₂-O-CH₂-CH=CH₂

Rf^{B2}: -CF₂O(CF₂CF₂O)_{9.8}(CF₂O)_{9.1}CF₂-

with the proviso that the repeating units enclosed in parentheses are randomly arranged, 100 g of m-xylene hexafluoride, and 121 g (0.50 mol) of tetramethylcyclotetrasiloxane, and heated to 90°C while stirring the mixture. Thereto was added 0.442 g of a toluene solution of a platinum/1,3-divinyl-tetramethyldisiloxane complex (containing 1.1×10⁻⁶ mol as Pt alone), and stirring was continued for 4 hours while internal temperature was maintained at 90°C or more. After confirming disappearance of the allyl group of raw material by ¹H-NMR, the solvent and excess tetramethylcyclotetrasiloxane were distilled off under reduced pressure. Thereafter, activated carbon treatment was performed to obtain 112 g of a colorless and transparent liquid compound (VIII) having the following formula:

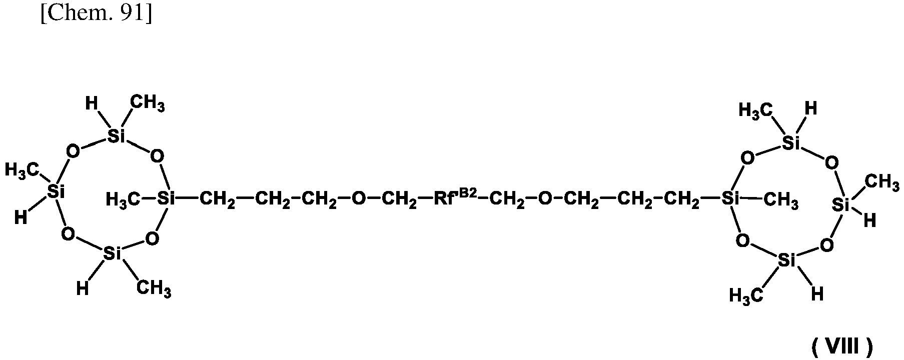

Rf^{B2}: -CF₂O(CF₂CF₂O)_{9.8}(CF₂O)_{9.1}CF₂-

with the proviso that the repeating units enclosed in parentheses are randomly arranged.

Under a dry air atmosphere, 15.1 g (0.15 mol) of 2-allyloxyethanol, 100.0 g of m-xylene hexafluoride, and 0.0884 g of a toluene solution of a chloroplatinic acid/vinylsiloxane complex (platinum-1,3-divinyl-tetramethyldisiloxane complex) (containing 2.2×10⁻⁷ mol as Pt alone) were mixed with 50.0 g of the compound (VIII) (having an amount of Si-H groups of 0.12 mol) obtained above, and the mixture was stirred at 100°C for 4 hours. After confirming disappearance of the Si-H group by ¹H-NMR and IR, the solvent and excess 2-allyloxyethanol were distilled off under reduced pressure, and activated carbon treatment was performed to obtain 60.2 g of a pale yellow and transparent liquid fluorine-containing alcohol compound (IX) having the following formula:

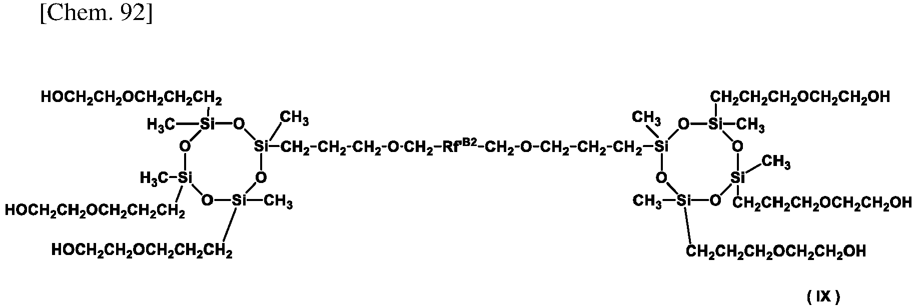

Rf^{B2}: -CF₂O(CF₂CF₂O)_{9.8}(CF₂O)_{9.1}CF₂-

with the proviso that the repeating units enclosed in parentheses are randomly arranged.

Under a dry air atmosphere, 50.0 g of THF and 13.7 g (0.097 mol) of acryloyloxyethyl isocyanate were mixed with 50.0 g of the fluorine-containing alcohol compound (IX) (having an amount of hydroxyl groups of 0.097 mol) obtained, and the mixture was heated to 50°C. To the mixture, 0.15 g of tetrakis(2-ethylhexyl) orthotitanate was added, and the resulting mixture was stirred at 50°C for 24 hours. After completion of the heating, distillation under reduced pressure was performed to obtain 61.5 g of a pale yellow high-viscosity liquid. From the results of ¹H-NMR and IR, the liquid was confirmed to be a fluorine-containing acrylic compound (B-2) shown below:

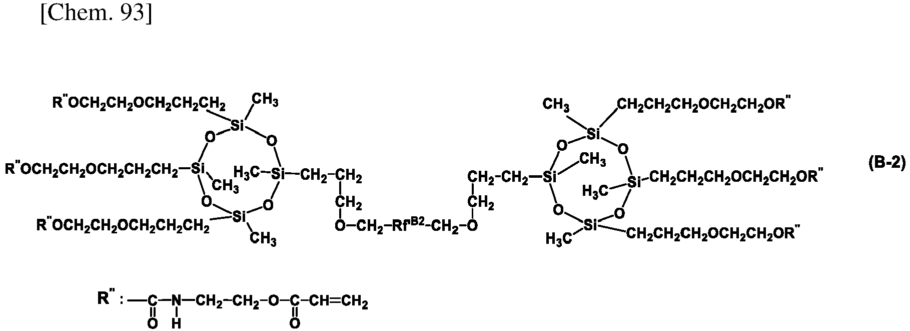

Rf^{B2}: -CF₂O(CF₂CF₂O)_{9.8}(CF₂O)_{9.1}CF₂-

with the proviso that the repeating units enclosed in parentheses are randomly arranged.

### [Synthesis Example 9] Synthesis of fluorine-containing acrylic compound (B-3)

Under a dry air atmosphere, 28.9 g (0.17 mol) of allyloxyethyl methacrylate, 100.0 g of m-xylene hexafluoride, and 0.0884 g of a toluene solution of a chloroplatinic acid/vinylsiloxane complex (platinum-1,3-divinyl-tetramethyldisiloxane complex) (containing 2.2×10⁻⁷ mol as Pt alone) were mixed with 50.0 g of the compound (VIII) (having an amount of Si-H groups of 0.12 mol) obtained in Synthesis Example 8 above, and the mixture was stirred at 90°C for 4 hours. After confirming disappearance of the Si-H group by ¹H-NMR and IR, the solvent and excess allyloxyethyl methacrylate were distilled off under reduced pressure, and activated carbon treatment was performed to obtain 59.8 g of a pale yellow and transparent high-viscosity liquid. From the results of ¹H-NMR and IR, the liquid was confirmed to be a fluorine-containing acrylic compound (B-3) shown below:

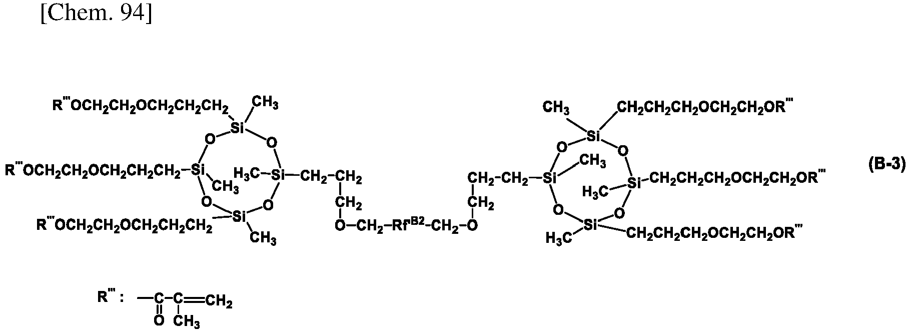

Rf^{B2}: -CF₂O(CF₂CF₂O)_{9.8}(CF₂O)_{9.1}CF₂-

with the proviso that the repeating units enclosed in parentheses are randomly arranged.

### [Examples 1 to 13 and Comparative Examples 1 to 4]

The raw material components of the fluorine-containing acrylic composition of the present invention are shown below.
(A) Fluorine-containing acrylic compound
   (A-1) Fluorine-containing acrylic compound obtained in Synthesis Example 1
   (A-2) Fluorine-containing acrylic compound obtained in Synthesis Example 2
   (A-3) Fluorine-containing acrylic compound obtained in Synthesis Example 3
   (A-4) Fluorine-containing acrylic compound obtained in Synthesis Example 4
   (A-5) Fluorine-containing acrylic compound obtained in Synthesis Example 5
   (A-6) Fluorine-containing acrylic compound obtained in Synthesis Example 6
(B) Fluorine-containing acrylic compound
   (B-1) Fluorine-containing acrylic compound obtained in Synthesis Example 7
   (B-2) Fluorine-containing acrylic compound obtained in Synthesis Example 8
   (B-3) Fluorine-containing acrylic compound obtained in Synthesis Example 9

The raw material components of the active energy ray-curable composition of the present invention are shown below.
(a) Non-fluorinated acrylic compound
   (a-1) Pentaerythritol ethoxy tetraacrylate
      [EBECRYL 40 manufactured by DAICEL-ALLNEX LTD.]
   (a-2) Dipentaerythritol polyacrylate
      [A-9550 manufactured by SHIN-NAKAMURA CHEMICAL Co., Ltd.]
(b) Photopolymerization initiator
   (b-1) 1-Hydroxycyclohexyl phenyl ketone
      (trade name: IRGACURE 184, manufactured by BASF Japan Ltd.)

### [Preparation of fluorine-containing active energy ray-curable composition]

All of the components (A) and (B) were diluted to 20 wt% with methyl ethyl ketone, the component (a-1) was diluted to 40 wt% with 2-propanol, and the component (a-2) was diluted to 40 wt% with butyl acetate. The components (A), (B), (a), and (b) were mixed so that the compounding weight ratio excluding the solvent components was as shown in Table 1 below, and thus a fluorine-containing active energy ray-curable composition was obtained.

### Compounding weight ratio of components (A), (B), (a), and (b) in Examples and Comparative Examples (excluding solvent components)

**[Table 1]**

| | (A) | (A) Compounding amount (pbw) | (B) | (B) Compounding amount (pbw) | (a) | (a) Compounding amount (pbw) | (b) | (b) Compounding amount (pbw) |
|---|---|---|---|---|---|---|---|---|
| Example 1 | (A-1) | 0.2 | (B-1) | 0.8 | (a-1) | 99 | (b-1) | 3 |
| Example 2 | (A-2) | 0.2 | (B-1) | 0.8 | (a-1) | 99 | (b-1) | 3 |
| Example 3 | (A-3) | 0.2 | (B-1) | 0.8 | (a-1) | 99 | (b-1) | 3 |
| Example 4 | (A-4) | 0.2 | (B-1) | 0.8 | (a-1) | 99 | (b-1) | 3 |
| Example 5 | (A-5) | 0.2 | (B-1) | 0.8 | (a-1) | 99 | (b-1) | 3 |
| Example 6 | (A-6) | 0.2 | (B-1) | 0.8 | (a-1) | 99 | (b-1) | 3 |
| Example 7 | (A-1) | 0.2 | (B-1) | 0.8 | (a-2) | 99 | (b-1) | 3 |
| Example 8 | (A-2) | 0.2 | (B-1) | 0.8 | (a-2) | 99 | (b-1) | 3 |
| Example 9 | (A-2) | 0.05 | (B-1) | 0.95 | (a-1) | 99 | (b-1) | 3 |
| Example 10 | (A-2) | 0.3 | (B-1) | 0.7 | (a-1) | 99 | (b-1) | 3 |
| Example 11 | (A-2) | 0.5 | (B-1) | 0.5 | (a-1) | 99 | (b-1) | 3 |
| Example 12 | (A-2) | 0.2 | (B-2) | 0.8 | (a-1) | 99 | (b-1) | 3 |
| Example 13 | (A-2) | 0.2 | (B-3) | 0.8 | (a-1) | 99 | (b-1) | 3 |
| Comparative Example 1 | | | | | (a-1) | 100 | (b-1) | 3 |
| Comparative Example 2 | (A-2) | 0.2 | | | (a-1) | 99.8 | (b-1) | 3 |
| Comparative Example 3 | (A-2) | 1 | | | (a-1) | 99 | (b-1) | 3 |
| Comparative Example 4 | | | (B-1) | 1 | (a-1) | 99 | (b-1) | 3 |

### [Coating and preparation of cured product]

Each fluorine-containing active energy ray-curable composition in Examples and Comparative Examples was applied onto a polycarbonate substrate with a wire bar No. 7 (wet film thickness: 16.0 µm). After the coating, drying was performed at 100°C for 1 minute, and then the coated surface was irradiated with ultraviolet rays with an integrated irradiation dose of 400 mJ/cm² in a nitrogen atmosphere using a conveyor type metal halide UV irradiation device (manufactured by Panasonic Electric Works Co., Ltd.) to cure the composition, and thus a cured film having a thickness of 5 µm was obtained.

### [Evaluation of coating state of composition]

The coating (coated surface appearance) of each fluorine-containing active energy ray-curable composition was visually observed. Evaluations shown below were not performed for a composition that was not smoothly applied. Table 2 shows the results.

### [Evaluation of anti-fouling property]

### 1) Measurement of water contact angle

Using a contact angle meter (DropMaster manufactured by Kyowa Interface Science Co., Ltd.), a droplet of 2 µL of water was dropped onto the cured film, and the water contact angle after 1 second was measured. The average of values obtained at a number of times of measurements of N = 5 was regarded as the measured value. Table 2 shows the results.

### 2) Measurement of oleic acid contact angle

Using a contact angle meter (DropMaster manufactured by Kyowa Interface Science Co., Ltd.), a droplet of 2 µL of oleic acid was dropped onto the cured film, and the oleic acid contact angle after 1 second was measured. The average of values obtained at a number of times of measurements of N = 5 was regarded as the measured value. Table 2 shows the results.

### 3) Evaluation of marker ink repellency

On the surface of the cured film, a straight line was drawn with a marker pen (Hi-Mckee-bold manufactured by ZEBRA CO., LTD.), and the degree of repellency was evaluated by visual observation. Table 2 shows the results.

### 4) Evaluation of marker ink wiping property

On the surface of the cured film, a straight line was drawn with a marker pen (Hi-Mckee-bold manufactured by ZEBRA CO., LTD.), and after 1 minute, the surface was lightly rubbed three times with tissue paper. A cured film on which the marker ink did not remain was evaluated as "wiped off", and a cured film on which the marker ink remained was evaluated as "not wiped off". Table 2 shows the results.

### [Evaluation of abrasion resistance]

### 1) Measurement of water contact angle after abrasion test

The surface of the cured film was subjected to an abrasion test using a rubbing tester (manufactured by Shinto Scientific Co., Ltd.), and the water contact angle after the test was measured. Evaluation was an average number of times performed at N = 8. Table 2 shows the results.

The test conditions are shown below.

| | |
|---|---|
| Eraser: | RUBBER STICK (manufactured by Minoan) |
| Movement distance (one way): | 40 mm |
| Movement speed: | 3,200 mm/min |
| Load: | 400 g/6 mm² ϕ |
| Number of wear: | 1,000 times |

**[Table 2]**

| | Coated surface appearance | Water contact angle [°] | Oleic acid contact angle [°] | Marker ink repellency | Marker ink wiping property | Water contact angle after abrasion test [°] |
|---|---|---|---|---|---|---|
| Example 1 | Smooth | 116 | 75 | Repellent | Wiped off | 101 |
| Example 2 | Smooth | 115 | 75 | Repellent | Wiped off | 104 |
| Example 3 | Smooth | 115 | 74 | Repellent | Wiped off | 102 |
| Example 4 | Smooth | 114 | 74 | Repellent | Wiped off | 97 |
| Example 5 | Smooth | 114 | 74 | Repellent | Wiped off | 99 |
| Example 6 | Smooth | 116 | 75 | Repellent | Wiped off | 100 |
| Example 7 | Smooth | 116 | 75 | Repellent | Wiped off | 99 |
| Example 8 | Smooth | 115 | 75 | Repellent | Wiped off | 102 |
| Example 9 | Smooth | 114 | 73 | Repellent | Wiped off | 99 |
| Example 10 | Smooth | 115 | 75 | Repellent | Wiped off | 105 |
| Example 11 | Smooth | 116 | 75 | Repellent | Wiped off | 106 |
| Example 12 | Smooth | 113 | 73 | Repellent | Wiped off | 96 |
| Example 13 | Smooth | 114 | 73 | Repellent | Wiped off | 98 |
| Comparative Example 1 | Smooth | 67 | 10 | Not repellent | Not wiped off | 60 |
| Comparative Example 2 | Orange peel-like | - | - | - | - | - |
| Comparative Example 3 | Orange peel-like | - | - | - | - | - |
| Comparative Example 4 | Smooth | 113 | 72 | Repellent | Wiped off | 7S |

As is apparent from the above results, the compositions in Comparative Examples 2 and 3 in which the component (B) was not blended and only the component (A) was blended have poor coatability and thus a smooth surface was not obtained, but with the compositions in Examples 1 to 13 of the present invention in which the components (A) and (B) were blended, a smooth coating surface can be produced. The compositions in Examples 1 to 13 of the present invention can form a surface high in both anti-fouling property and abrasion resistance compared with the composition in Comparative Example 1 in which the components (A) and (B) were not blended and the composition in Comparative Example 4 in which the component (A) was not blended and only the component (B) was blended.

## Claims

1. A fluorine-containing acrylic composition comprising:
as essential components,
(A) a fluorine-containing acrylic compound as a component (A) that is a linear polymer having a main chain of fluoropolyether, the component (A) having a molecular chain including a trifluoromethyl group at one terminal and a (meth)acrylic group at another terminal, the component (A) having two or more bonds of an identical kind or different kinds selected from the group consisting of a carboxylic acid ester bond, a sulfonic acid ester bond, an amide bond, a urethane bond, and a urea bond per molecule; and
(B) a fluorine-containing acrylic compound as a component (B) that is a linear polymer having a main chain of fluoropolyether, the component (B) having a molecular chain including two or more (meth)acrylic groups at each terminal, the component (B) having 4 to 10 (meth)acrylic groups on average per molecule,
the fluorine-containing acrylic composition containing 1 to 400 parts by weight of the component (A) per 100 parts by weight of the component (B).

2. The fluorine-containing acrylic composition according to claim 1, wherein the component (A) is a fluorine-containing acrylic compound having the general formula (1):
F-Rf^{A}-C(=O)-NR^{a}ₐ[Y-[X¹]_{b}]₂₋ₐ (1)
wherein Rf^{A} is a divalent perfluoropolyether group, R^{a} is a hydrogen atom or a monovalent hydrocarbon group having 1 to 8 carbon atoms, Y is independently a (b+1)-valent linking group having 1 to 20 carbon atoms, X¹ is independently a monovalent organic group containing an acrylic group or an α-substituted acrylic group and one or more bonds selected from the group consisting of a carboxylic acid ester bond, a sulfonic acid ester bond, an amide bond, a urethane bond, and a urea bond and containing at least one of the acrylic group or the α-substituted acrylic group on average per molecule, a is 0 or 1, and b is an integer of 1 to 10.

3. The fluorine-containing acrylic composition according to claim 2, wherein
in the component (A), Rf^{A} in the general formula (1) is a divalent perfluoropolyether group having the structural formula: 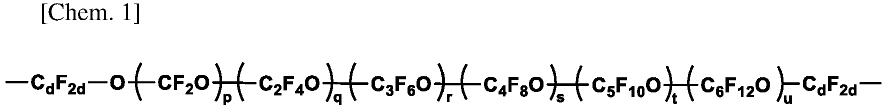 wherein d is independently for each unit an integer of 1 to 3, p, q, r, s, t, and u are each an integer of 0 to 200, p + q + r + s + t + u is an integer of 3 to 200, each of these units may be linear or branched, and each of the repeating units shown in parentheses appended with p, q, r, s, t, and u may be randomly arranged.

4. The fluorine-containing acrylic composition according to claim 2 or 3, wherein
in the component (A), Rf^{A} in the general formula (1) is any of divalent perfluoropolyether groups having the structural formula:
-CF₂O-(CF₂O)ₚ₁(CF₂CF₂O)_{q1}-CF₂- 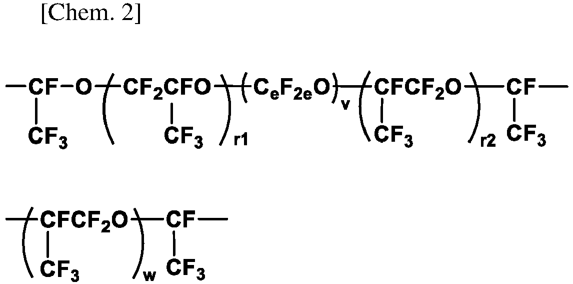
wherein each of the repeating units enclosed in parentheses appended with p1, q1, r1, r2, and v are randomly arranged, p1 is an integer of 1 to 199, q1 is an integer of 1 to 170, p1 + q1 is 6 to 200, e is independently for each unit an integer of 1 to 6, v is an integer of 0 to 6, r1 and r2 are each an integer of 1 to 100, r1 + r2 is an integer of 2 to 120, v + r1 + r2 is an integer of 3 to 126, CₑF₂ₑO may be linear or branched, and is linear when e is 3, and w is an integer of 4 to 120.

5. The fluorine-containing acrylic composition according to any one of claims 2 to 4, wherein
in the component (A), X¹ in the general formula (1) has a structure having the following formula: 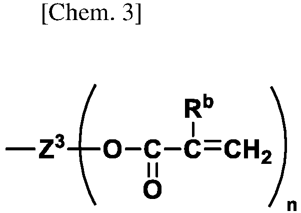 wherein R^{b} is independently a hydrogen atom, a fluorine atom, a methyl group, or a trifluoromethyl group, Z³ is a divalent or trivalent hydrocarbon group having 1 to 18 carbon atoms and containing one or more bonds selected from the group consisting of a carboxylic acid ester bond, a sulfonic acid ester bond, an amide bond, a urethane bond, and a urea bond, and n is 1 or 2.

6. The fluorine-containing acrylic composition according to any one of claims 2 to 5, wherein in the component (A), X¹ in the general formula (1) has any one of the following formulas.

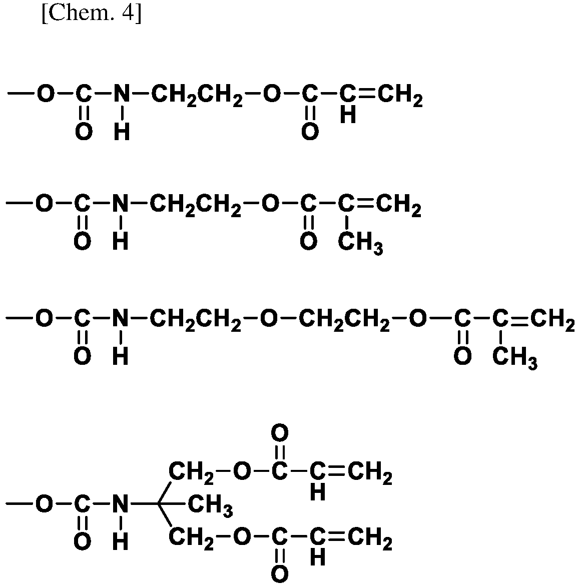

7. The fluorine-containing acrylic composition according to any one of claims 2 to 6, wherein in the component (A), the fluorine-containing acrylic compound having the general formula (1) is selected from compounds of the following formulas: 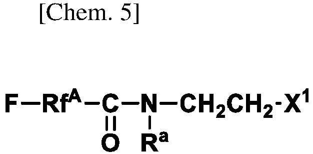 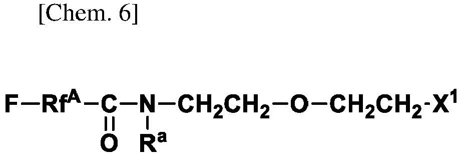 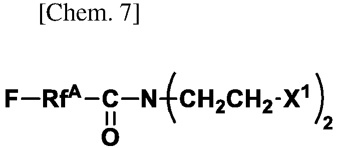 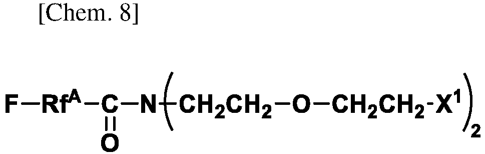 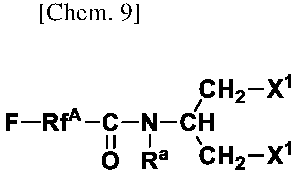 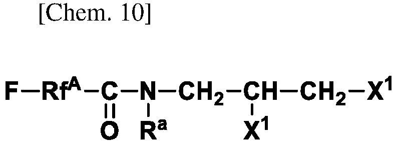 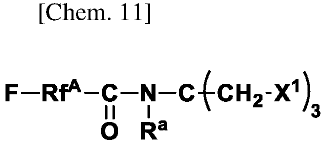 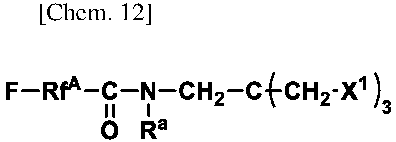 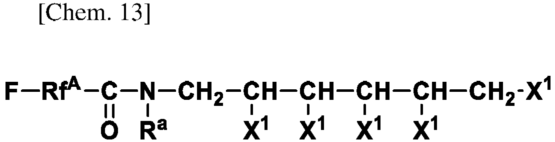 wherein Rf^{A}, R^{a}, and X¹ are as defined above.

8. The fluorine-containing acrylic composition according to any one of claims 1 to 7, wherein the component (B) is a fluorine-containing acrylic compound having the general formula (2): 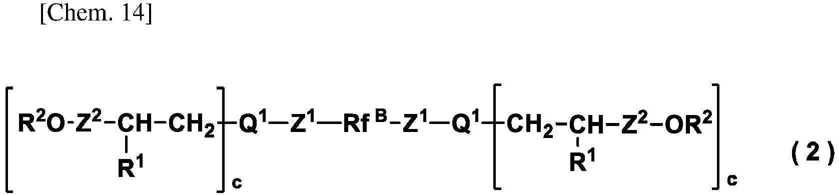 wherein Rf^{B} is a divalent perfluoropolyether group, Z¹ is independently a linking group composed of a divalent hydrocarbon group having 1 to 20 carbon atoms which may contain at least one heteroatom selected from an oxygen atom, a nitrogen atom, and a silicon atom, and which may contain a cyclic structure therein, with the proviso that a part of hydrogen atoms bonded to a carbon atom may be substituted with a fluorine atom, Q¹ is independently a (c+1)-valent linking group containing at least (c+1) number of silicon atoms, which may take a cyclic structure, c is independently an integer of 2 to 5, Z² is independently a divalent hydrocarbon group having 1 to 100 carbon atoms which may contain an oxygen atom and/or a nitrogen atom, and which may contain a cyclic structure therein, R¹ is independently a hydrogen atom or a monovalent hydrocarbon group having 1 to 8 carbon atoms, R² is independently a hydrogen atom or a monovalent organic group having a (meth)acrylic group which may contain an oxygen atom and/or a nitrogen atom, with the proviso that 2 or more R²s at each terminal per molecule and 4 to 10 R²s on average per molecule are the monovalent organic group.

9. The fluorine-containing acrylic composition according to claim 8, wherein
in the component (B), Rf^{B} in the general formula (2) is a divalent perfluoropolyether group having the structural formula: 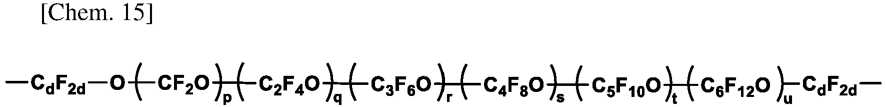 wherein d is independently for each unit an integer of 1 to 3, p, q, r, s, t, and u are each an integer of 0 to 200, p + q + r + s + t + u is an integer of 3 to 200, each of these units may be linear or branched, and each of the repeating units shown in parentheses appended with p, q, r, s, t, and u may be randomly arranged.

10. The fluorine-containing acrylic composition according to claim 8 or 9, wherein
in the component (B), Rf^{B} in the general formula (2) is any of divalent perfluoropolyether groups having the structural formula:
-CF₂O-(CF₂O)ₚ₁(CF₂CF₂O)_{q1}-CF₂- 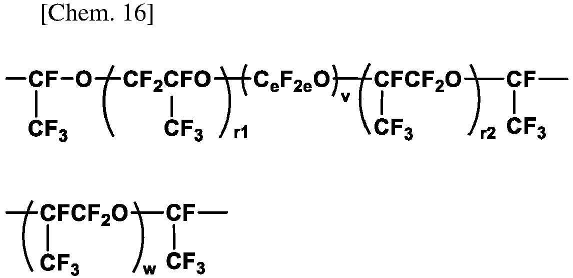
wherein each of the repeating units enclosed in parentheses appended with p1, q1, r1, r2, and v are randomly arranged, p1 is an integer of 1 to 199, q1 is an integer of 1 to 170, p1 + q1 is 6 to 200, e is independently for each unit an integer of 1 to 6, v is an integer of 0 to 6, r1 and r2 are each an integer of 1 to 100, r1 + r2 is an integer of 2 to 120, v + r1 + r2 is an integer of 3 to 126, CₑF₂ₑO may be linear or branched, and is linear when e is 3, and w is an integer of 4 to 120.

11. The fluorine-containing acrylic composition according to any one of claims 8 to 10, wherein in the component (B), Z¹ in the general formula (2) has any one of the following formulas:
-CH₂CH₂-
-CH₂CH₂CH₂-
-CH₂CH₂CH₂CH₂-
-CH₂OCH₂CH₂-
-CH₂OCH₂CH₂CH₂-

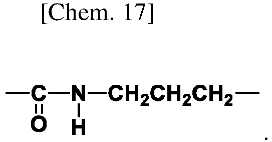

12. The fluorine-containing acrylic composition according to any one of claims 8 to 11, wherein in the component (B), Q¹ in the general formula (2) has the following formula: 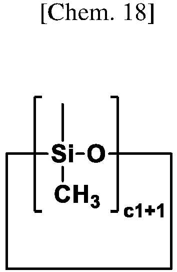 wherein c1 is 2 or 3.

13. The fluorine-containing acrylic composition according to any one of claims 8 to 12, wherein
in the component (B), the fluorine-containing acrylic compound having the general formula (2) is a fluorine-containing acrylic compound having the general formula (3) or (4): 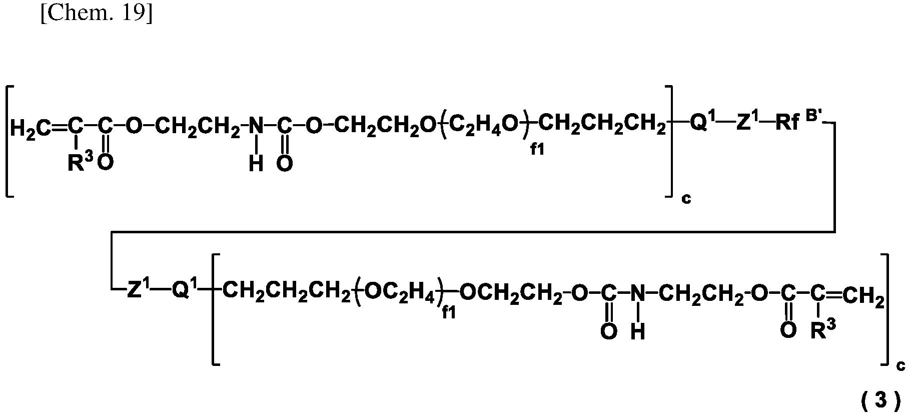 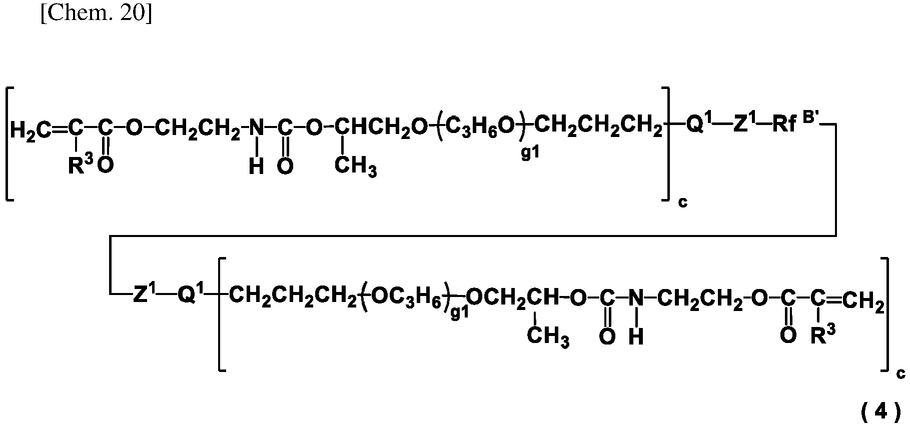 wherein Z¹, Q¹, and c are as defined above, Rf^{B}' is -CF₂O(CF₂O)ₚ₁(CF₂CF₂O)_{q1}CF₂-, p1, q1, and p1 + q1 are as defined above, -(CF₂O)- and -(CF₂CF₂O)- are randomly arranged, R³ is a hydrogen atom or a methyl group, f1 and g1 are an integer of 0 to 10, and each of the repeating units enclosed in parentheses appended with f1 and g1 may be linear or branched.

14. A fluorine-containing active energy ray-curable composition comprising 0.005 to 100 parts by weight of the fluorine-containing acrylic composition according to any one of claims 1 to 13 per 100 parts by weight of an active energy ray-curable composition (E).

15. The fluorine-containing active energy ray-curable composition according to claim 14, wherein the active energy ray-curable composition (E) contains a non-fluorinated acrylic compound (a).

16. The fluorine-containing active energy ray-curable composition according to claim 14 or 15, wherein the active energy ray-curable composition (E) contains a photopolymerization initiator (b).

17. The fluorine-containing active energy ray-curable composition according to any one of claims 14 to 16, wherein the active energy ray-curable composition (E) contains a solvent.

18. An article having a cured product layer of the fluorine-containing active energy ray-curable composition according to any one of claims 14 to 17 on its surface.
